(19) Europäisches Patentamt
European Patent Office
Office européen des brevets

(11) **EP 3 299 087 A1**

(12) **EUROPEAN PATENT APPLICATION**

(43) Date of publication:
28.03.2018 Bulletin 2018/13

(51) Int Cl.:
**B01J 19/32** (2006.01)

(21) Application number: **17192080.4**

(22) Date of filing: **20.09.2017**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **26.09.2016 US 201615276247**
**26.09.2016 EP 16190561**
**17.08.2017 US 201715679269**

(71) Applicant: **Air Products and Chemicals, Inc.**
**Allentown, PA 18195-1501 (US)**

(72) Inventors:
• SUNDER, Swaminathan
Allentown
Pennsylvania 18104 (US)
• WILSON, Jonathan
Sale, Cheshire M33 3DW (GB)
• HOUGHTON, Patrick Alan
Emmaus, Pennsylvania 18049 (US)
• MESKI, George Amir
Allentown, Pennsylvania 18103 (US)

(74) Representative: **Beck Greener**
**Fulwood House**
**12 Fulwood Place**
**London WC1V 6HR (GB)**

(54) **EXCHANGE COLUMN WITH CORRUGATED STRUCTURED PACKING AND METHOD FOR USE THEREOF**

(57) An exchange column having at least a first layer of structured packing and a second layer of structured packing, each layer formed from corrugated plates, the corrugated plates of the second layer having an orientation that is rotated at an angle relative to the corrugated plates of the first layer from 20° to 90°, wherein the vertical height of the first layer and/or the vertical height of the second layer is greater than 350 mm or greater than 400 mm.

FIG. 6

## Description

The present invention relates to an exchange column containing structured packing and a method for making and using the exchange column. Structured packing has particular application in heat and/or mass exchange columns, especially in cryogenic air separation processes, although it may be used in other applications, such as heat exchangers, for example.

The term "column" as used herein means a distillation or fractionation column, i.e. a column wherein liquid and vapor phases are countercurrently contacted to effect separation of a fluid mixture, such as by contacting of the vapor and liquid phases on packing elements or on a series of vertically-spaced trays or plates mounted within the column.

A divided wall column is a column having at least one dividing wall located in the interior space of the column defining separated volumes within the column that are thermally coupled. Dividing walls are typically oriented vertically. Two different mass transfer separations may occur in the separated volumes on either side of the dividing wall. US 7,357,378 B2, incorporated herein by reference, discloses a divided wall exchange column.

The term "packing" means solid or hollow bodies of predetermined size, shape and configuration used as column internals to provide surface area for the liquid to allow heat and/or mass transfer at the liquid-vapor interface during countercurrent flow of two phases. Two broad classes of packings are "random" and "structured".

"Random packing" means packing wherein individual members have no specific orientation relative to each other or to the column axis. Random packings are traditionally small, hollow structures with large surface area per unit volume that are loaded into a column in a manner resulting in a random orientation of the packing.

"Structured packing" means packing wherein individual members have specific orientation relative to each other and to the column axis. Structured packings usually are made of thin metal foils stacked in layers.

The term "surface area density" means the surface area of the structured packing per unit volume of the structured packing, and usually is expressed in terms of $m^2/m^3$ of the volume occupied by the packing.

In processes such as distillation, it is advantageous to use structured packing to promote heat and/or mass transfer between counterflowing liquid and vapor streams. Structured packing, when compared with random packing or trays, offers the benefits of higher efficiency for heat and/or mass transfer with lower pressure drop. It also has more predictable performance than random packing.

The separation performance of structured packing is often given in terms of height equivalent to a theoretical plate (HETP), which is the height of packing over which a composition change is achieved that is equivalent to the composition change achieved by a theoretical plate. The term "theoretical plate" means a contact process between gaseous and liquid phases such that the existing gaseous and liquid streams are in equilibrium. The smaller the HETP of a particular packing for a particular separation, the more efficient the packing, because the height of the packing bed being used decreases with HETP.

The separation performance of structured packing or packing efficiency may also be described in terms of the height of a transfer unit (HTU) or height of an overall transfer unit, gas concentration basis ($H_{OG}$), having units of length.

Packing efficiency parameters such as HETP and $H_{OG}$ are common parameters used in the industry and are defined in reference books, for example, Perry's Chemical Engineers' Handbook, 8th Edition, section 14.4.2.

Cryogenic separation of air is carried out by passing liquid and vapor in countercurrent contact through a distillation column. A vapor phase of the mixture ascends with an ever-increasing concentration of the more volatile components (e.g., nitrogen) while a liquid phase of the mixture descends with an ever-increasing concentration of the less volatile components (e.g., oxygen). Various packings or trays may be used to bring the liquid and gaseous phases of the mixture into contact to accomplish mass transfer between the phases.

There are many processes for the separation of air by cryogenic distillation into its components (i.e. nitrogen, oxygen, argon, etc.). Such processes are described for example, in US 6,357,728 B1, and EP 2 822 683 B1, each incorporated herein by reference.

As described in the prior art, structured packing may be used to provide contact between the liquid and gaseous phases in the exchange column for separating various components, e.g. oxygen, nitrogen, and optionally argon.

The conventional technology for using structured packing has been described in various patents pertaining to structured packing that followed U.S. Pat. No. 4,296,050 (Meier), which describes corrugated structured packing and its applications.

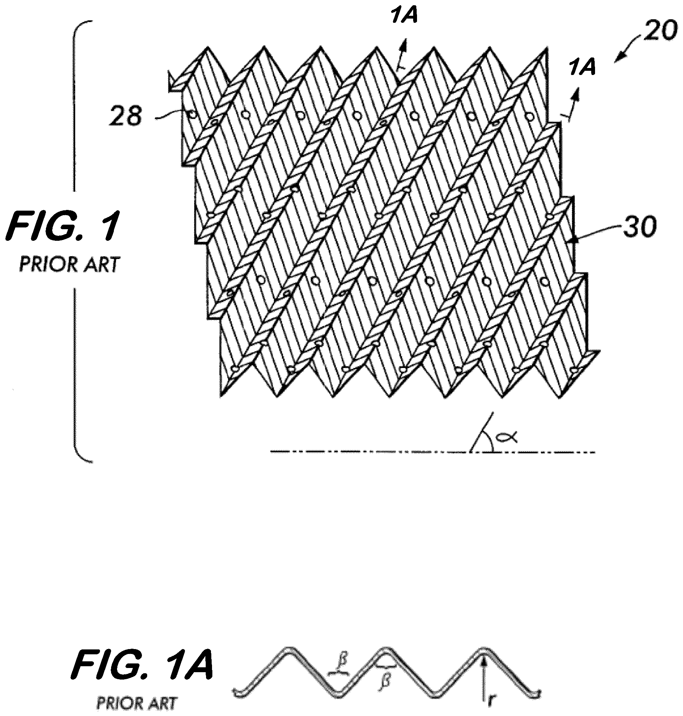

A basic conventional structured packing element 20 is shown in FIGS. 1 and 1A. Each packing element is made of thin metal foil, thin plastic foil, or other suitable material which is corrugated.

In addition to being corrugated, the elements or sheets may have a surface texture 30 (e.g., lateral or horizontal striations), perforations, holes or apertures 28, fluting, dimples, grooves, or other features which can enhance the performance of the basic element 20 in order to meet specific requirements for its intended application.

The perforations 28 and the texture 30 formed by elevated/depressed areas aid liquid/vapor spreading on the surface of foil, thus improving the heat and mass transfer efficiency of the packing. Typically, the surface area of the foil occupied by the perforations is from 5% to 20%. Typically, the fluting may be in the form of horizontal striations, or a bidirectional surface texture in the form of fine grooves in crisscrossing relation.

The corrugations, as illustrated in the sectional view of FIG. 1A, are formed in a wavelike pattern. The two alternating sloping sides of the corrugations form an angle, $\beta$, referred to as the "included angle". It is most common for the waves of the corrugations to be nearly triangular in shape, although some finite radius of curvature, typically called the "root radius," $r$, is present in the folds, as shown in FIG. 1A. A root radius, $r$, in the range from 0.1 to 3 millimeters is preferred, while it is most preferred to have a root radius in the range from 0.3 to 1 millimeters. Each corrugation when approximated to be a substantially triangular cross-section may have an included angle, $\beta$, ranging from 80° to 110° or ranging from 90° to 100° as disclosed in US 6,357,728 and US 6,598,861, each incorporated herein by reference.

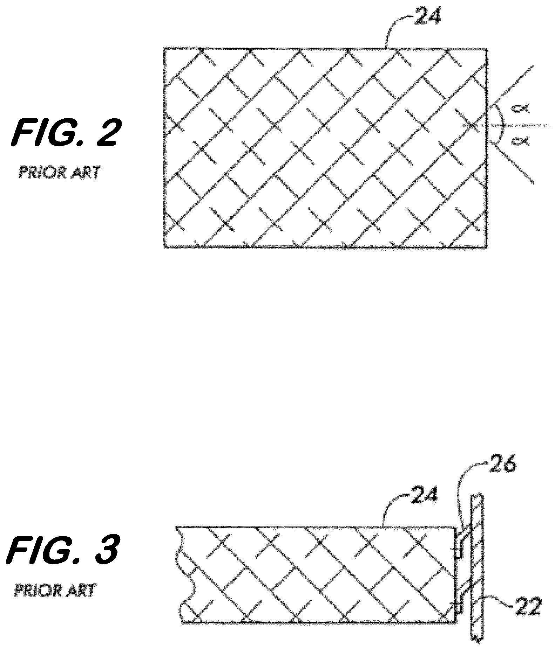

A typical structured packing employs vertically-oriented corrugated packing sheets or elements 20 such as that in FIGS. 1 and 1A wherein the corrugations are arranged at an angle, $\alpha$, to the horizontal, referred to as the "corrugation angle." Each element is positioned such that its corrugation direction is reversed from the corrugation direction of its adjacent packing sheet, as illustrated in FIG. 2. The solid diagonal lines represent the corrugations of one packing element, and the broken diagonal lines represent the corrugations of an adjacent packing element. When placed in the vertical orientation for use in a distillation column, the corrugations form an angle, $\alpha$, with the horizontal. The corrugation angle, $\alpha$, may range from about 35° to about 65° or range from about 40° to about 60°, as disclosed in US 6,357,728 and US 6,598,861.

Using such basic packing elements 20, a "brick" 24 of structured packing is made by assembling the elements (typically about 40 to 50 elements per brick) such that the corrugations of adjacent elements are arranged in a crisscrossing fashion shown in FIG. 2. (The means used to secure the elements in place are not shown.) When the bricks 24 are placed within an exchange column 22, the edges of the bricks near the wall are rough and jagged, creating gaps. To reduce liquid bypass, wipers 26 typically are used as shown in FIG. 3.

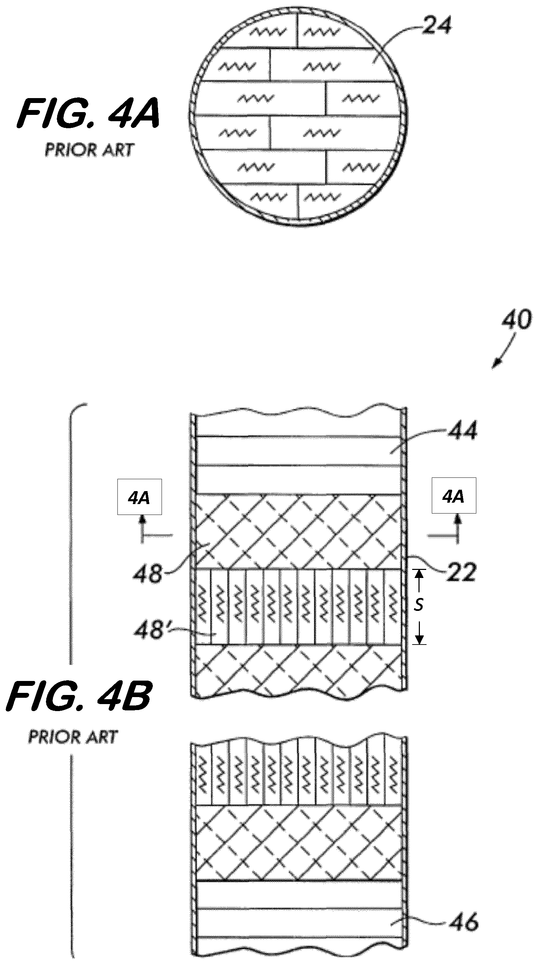

A distillation column 40 packed with conventional structured packing is shown schematically in FIGS. 4A and 4B.

Structured packing bricks 24 typically are assembled into layers (48, 48') in a section of a distillation column 40 as shown in FIGS. 4A and 4B. FIG. 4A is a plan view which shows the arrangement of about twelve bricks 24 at one elevation as a sectional view at 4A-4A in FIG. 4B. FIG. 4B shows an elevation view of the entire arrangement of a structured packing column 40 having a plurality of layers (48, 48') in a section between a liquid distributor 44 and a vapor distributor 46, wherein successive layers (48, 48') of packing (typically each layer having a height, s, of about 0.2 m (8 inches)) are rotated relative to each other at right angles (i.e., 90°). This is the most common arrangement, but other rotation patterns can be used (e.g., where successive layers are rotated at an angle between about 0° and about 90°).

Within a layer of structured packing in a column, multiple foils are oriented vertically (that is to say, with the plane of the foil substantially parallel to the axis of the column), with adjacent foils having their corrugations oriented transversely (that is to say, if a first foil has its corrugations running from bottom left to top right, an adjacent foil will be oriented such that its corrugations run from bottom right to top left). Such an arrangement is depicted in Figure 3 of US 4,296,050 (Meier). It is conventional to rotate successive layers of structured packing, typically by an angle of 90° about the column axis with respect to the underlying layer, in order to improve the flow characteristics. Such an arrangement is shown in Figure 4 of US 4,296,050 (Meier). However, each rotation increases the pressure drop through the column comprised of the packing.

Structured packing and its features are described, for example, in Distillation Design, Chapter 8, Henry Z. Kister, McGraw-Hill, Inc. 1992, Distillation Operation, Henry Z. Kister, McGraw-Hill, Inc. 1990, and Perry's Chemical Engineer's Handbook, 8th Edition, 2008, Chapter 14.4. EQUIPMENT FOR DISTILLATION AND GAS ADSORPTION: PACKED COLUMNS, each incorporated herein by reference.

In Perry's Chemical Engineer's Handbook, 8th Ed., it states "The corrugations spread gas and liquid flow through a single element in a series of parallel planes. To spread the gas and liquid uniformly in all radial planes, adjacent elements are rotated so that sheets of one element are at a fixed angle to the layer below (Fig. 14-51). For good spread, element height, s, is relatively short (typically 200 to 300 mm, 8 to 12 in.) and the angle of rotation is around 90°." The element height, s, corresponds to the height of the structured packing layer.

In *Distillation Design,* §8.1.8 of Kister, it states "The corrugated sheets are assembled into an element, typically 8 to 12 in tall." In *Distillation Operation,* §10.8 of Kister, it states that "The packing is usually supplied in sections, or "bricks." Typical brick height is 8 to 12 in." (i.e. 200 mm to 300 mm). Kister goes on to state that "A brick can be as long as the wall-to-wall distance in smaller columns, but to minimize the possibility of damage it is better to have a number of bricks make up this distance in the central portion of the column."

While structured packing in exchange columns has been used for many years and improvements made over the years, industry still desires exchange columns having improved separation performance.

The present invention relates to an exchange column with corrugated structured packing, a method for using the exchange column, and a method of making the exchange column.

There are several aspects of the invention as outlined below. In the following, specific aspects of the invention are outlined below. The reference numbers and expressions set in parentheses are referring to an example embodiment explained further below with reference to the figures. The reference numbers and expressions are, however, only illustrative and do not limit the aspect to any specific component or feature of the example embodiment. The aspects can be formulated as claims in which the reference numbers and expressions set in parentheses are omitted or replaced by others as appropriate.

Aspect 1. An exchange column comprising:

one or more walls (105) defining one or more volumes within the one or more walls (105), at least one volume of the one or more volumes having a longitudinal axis (101) and a cross section normal to the longitudinal axis (101), the cross section having a diameter, $D$, and an area greater than 0.636 m$^2$;

a first layer of structured packing (110) disposed within the at least one volume, the first layer having a height, $h_1$, the first layer of structured packing (110) comprising

(*i-a*) a first set of corrugated plates (111) disposed in vertically parallel relation, each corrugated plate of the first set of corrugated plates (111) having at least one aperture and a plurality of regularly spaced corrugations disposed in crisscrossing relation to the corrugations of an adjacent corrugated plate, the first set of corrugated plates (111) having a vertical height (wherein the vertical height is in a direction aligned with gravity), wherein the height of the first layer (110) is the vertical height of the first set of corrugated plates (111), or

(*i-b*) a first group (210) of two or more sets of corrugated plates (211, 212), the corrugated plates of each set of the two or more sets (211, 212) disposed in vertically parallel relation, each corrugated plate of each set having at least one aperture and a plurality of regularly spaced corrugations disposed in crisscrossing relation to the corrugations of an adjacent corrugated plate, the two or more sets of corrugated plates (211, 212) of the first group (210) positioned vertically relative to one another (i.e. one on top of the other), wherein the corrugated plates of the two or more sets of corrugated plates (211, 212) of the first group (210) are aligned or rotated relative to the corrugated plates of an adjacent set of the two or more sets (211, 212) by less than 5°, or less than 2°, or less than 1 °, wherein the two or more sets of corrugated plates (211, 212) of the first group (210) have a combined vertical height (where the combined vertical height is in a direction aligned with gravity), wherein the height of the first layer (110) is the combined vertical height of the two or more sets of corrugated plates (211, 212) of the first group (210); and

a second layer of structured packing (120) disposed within the at least one volume, the second layer having a height, $h_2$, the second layer of structured packing (120) comprising

(*ii-a*) a second set of corrugated plates (121) disposed in vertically parallel relation, each corrugated plate of the second set of corrugated plates (121) having at least one aperture and a plurality of regularly spaced corrugations disposed in crisscrossing relation to the corrugations of an adjacent corrugated plate, the second set of corrugated plates (121) having a vertical height (where the vertical height is in a direction aligned with gravity) wherein the height of the second layer (120) is the vertical height of the second set of corrugated plates (121), or

(*ii-b*) a second group (220) of two or more sets of corrugated plates (221, 222), the corrugated plates of each set of the two or more sets (221, 222) of the second group (220) disposed in vertically parallel relation, each corrugated plate of each set of the second group (220) having at least one aperture and a plurality of regularly spaced corrugations disposed in crisscrossing relation to the corrugations of an adjacent corrugated plate, the two or more sets of corrugated plates (221, 222) in the second group (220) positioned vertically relative to one another (i.e. one on top of the other), wherein the corrugated plates of the two or more sets of corrugated plates (221, 222) of the second group (220) are aligned or rotated relative to the corrugated plates of an adjacent set of the two or more sets (221, 222) of the second group (220) by less than 5°, or less than 2°, or less than 1°, wherein the two or more sets of corrugated plates of the second group have a combined vertical height wherein the height of the second layer is the combined vertical height of the two or more sets of corrugated plates of the second group;

wherein the first layer of structured packing (110) is located above and adjacent the second layer of structured packing (120), wherein the corrugated plates of the first layer (110) adjacent the corrugated plates of the second layer (120) have an orientation that is rotated at an angle (i.e. a rotation angle) relative to the adjacent corrugated plates of the second layer (120), the angle ranging from 20° to 90°;

wherein at least one of the height of the first layer of structured packing (110) and the height of the second layer of structured packing (120) is greater than 350 mm or greater than 400 mm.

Aspect 2. The exchange column according to aspect 1 wherein the height, $h_1$, of the first layer and the diameter, $D$, of the cross section define a first height-to-diameter ratio, $\dfrac{h_1}{D}$, and the height, $h_2$, of the second layer and the diameter, $D$, of the cross section define a second height-to-diameter ratio, $\dfrac{h_2}{D}$, wherein at least one of (or both) the first height-to-diameter ratio, $\dfrac{h_1}{D}$, and the second height-to-diameter ratio, $\dfrac{h_2}{D}$, range from 0.35 and 0.6, or range from 0.4 to 0.55, or range from 0.45 to 0.55.

Aspect 3. The exchange column according to aspect 1 or aspect 2 wherein the angle (i.e. the rotation angle) ranges from 70° to 90°.

Aspect 4. The exchange column according to any one of aspects 1 to 3 wherein the height of the first layer of structure packing (110) and the height of the second layer of structured packing (120) are greater than 350 mm or greater than 400 mm.

Aspect 5. The exchange column according to any one of aspects 1 to 4 wherein the second layer of structured packing (120) comprises the second set of corrugated plates (121) and the second set of corrugated plates (121) have a vertical height greater than 350 mm or greater than 400 mm and wherein the second set of corrugated plates (121) have a vertical height less than 1000 mm.

Aspect 6. The exchange column according to any one of aspects 1 to 4 wherein the second layer of structured packing (120) comprises the second group (220) of two or more sets of corrugated plates (221,222), and wherein the two or more sets of corrugated plates (221, 222) of the second group (220) have a combined vertical height greater than 350 mm or greater than 400 mm.

Aspect 7. The exchange column according to aspect 6 wherein the combined vertical height of the two or more sets of corrugated plates (221, 222) of the second group (220) is less than 7.5 m, or less than 3.5 m, or less than 2.5 m.

Aspect 8. The exchange column according to any one of aspects 1 to 7 wherein the area of the cross section of the at least one volume is less than 177 $m^2$, or less than 40 $m^2$, or less than 24 $m^2$, and/or wherein the diameter of the cross section of the at least one volume is less than 15 m, or less than 7.1 m, or less than 5.5 m.

Aspect 9. The exchange column according to any one of aspects 1 to 8 wherein the first layer of structured packing comprises the first set of corrugated plates (111) and wherein the first set of corrugated plates (111) have a vertical height less than 1000 mm.

Aspect 10. The exchange column according to any one of aspects 1 to 8 wherein the first layer of structured packing (110) comprises the first group (210) of two or more sets of corrugated plates (211, 212), wherein the two or more sets of corrugated plates (211, 212) of the first group (210) have a combined vertical height less than 7.5 m, or less than 3.5 m, or less than 2.5 m.

Aspect 11. The exchange column according to any one of aspects 1 to 10 further comprising:

a third layer of structured packing (130) disposed within the at least one volume, the third layer of structured packing (130) having a height, the third layer of structured packing (130) comprising

(iii-a) a third set of corrugated plates (131) disposed in vertically parallel relation, each corrugated plate of the third set of corrugated plates (131) having at least one aperture and a plurality of regularly spaced corrugations disposed in crisscrossing relation to the corrugations of an adjacent corrugated plate, the third set of corrugated plates (131) having a vertical height wherein the height of the third layer (130) is the vertical height of the third set of corrugated plates (131), or

(iii-b) a third group (230) of two or more sets of corrugated plates (231, 232), the corrugated plates of each set of the two or more sets (231, 232) of the third group (230) disposed in vertically parallel relation, each corrugated plate of each set of the third group (230) having at least one aperture and a plurality of regularly spaced corrugations disposed in crisscrossing relation to the corrugations of an adjacent corrugated plate, the two or more sets of corrugated plates (231, 232) in the third group (230) positioned vertically relative to one another (i.e. one on top of the other), wherein the corrugated plates of the two or more sets of corrugated plates (231, 232) of the third group (230) are aligned or rotated relative to the corrugated plates of an adjacent set of the two or more sets of the third group (230) by less than 5°, or less than 2° or less than 1°, wherein the two or more sets of corrugated plates of the third group have a combined vertical height (where the combined vertical height is in a direction aligned with gravity) wherein the height of the third layer is the combined vertical height of the two or more sets of corrugated plates of the third group;

wherein the third layer of structured packing (130) is located below and adjacent the second layer of structured packing (120), wherein the corrugated plates of the third layer (130) adjacent the corrugated plates of the second layer (120) have an orientation that is rotated at an angle (i.e. a rotation angle) relative to the adjacent corrugated plates of the second layer (120), the angle ranging from 20° to 90°; and optionally

a fourth layer of structured packing (140) disposed within the at least one volume, the fourth layer of structured packing (140) having a height, the fourth layer of structured packing (140) comprising

(iv-a) a fourth set of corrugated plates (141) disposed in vertically parallel relation, each corrugated plate of the fourth set of corrugated plates (141) having at least one aperture and a plurality of regularly spaced corrugations disposed in crisscrossing relation to the corrugations of an adjacent corrugated plate, the fourth set of corrugated plates (141) having a vertical height (where the vertical height is in a direction aligned with gravity) wherein the height of the fourth layer (140) is the vertical height of the fourth set of corrugated plates (141), or

(iv-b) a fourth group (240) of two or more sets of corrugated plates (241, 242), the corrugated plates of each set of the two or more sets (241, 242) of the fourth group (240) disposed in vertically parallel relation, each corrugated plate of each set of the fourth group (240) having at least one aperture and a plurality of regularly spaced corrugations disposed in crisscrossing relation to the corrugations of an adjacent corrugated plate, the two or more sets of corrugated plates (241, 242) in the fourth group (240) positioned vertically relative to one another (i.e. one on top of the other), wherein the corrugated plates of the two or more sets of corrugated plates (241, 242) of the fourth group (240) are aligned or rotated relative to the corrugated plates of an adjacent set of the two or more sets (241, 242) of the fourth group (240) by less than 5°, or less than 2°, or less than 1°, wherein the two or more sets of corrugated plates (241, 242) of the fourth group (240) have a combined vertical height (where the combined vertical height is in a direction aligned with gravity) wherein the height of the fourth layer (140) is the combined vertical height of the two or more sets of corrugated plates (241, 242) of the fourth group (240);

wherein the fourth layer of structured packing (140), if present, is located below and adjacent the third layer of structured packing (130), wherein the corrugated plates of the fourth layer (140) adjacent the corrugated plates of the third layer (130) have an orientation that is rotated at an angle (i.e. a rotation angle) relative to the adjacent corrugated plates of the third layer (130), the angle ranging from 20° to 90°;

Aspect 12. The exchange column according to aspect 11 wherein the angle of the corrugated plates of the third layer (130) relative to the adjacent corrugated plates of the second layer (120) ranges from 70° to 90°, preferably about 90°, and wherein the angle of the corrugated plates of the fourth layer (140), if present, relative to the adjacent corrugated plates of the third layer (130) ranges from 70° to 90°, preferably about 90°.

Aspect 13. The exchange column according to aspect 11 or aspect 12 wherein the third layer of structured packing (130) comprises the third set of corrugated plates and the third set of corrugated plates have a vertical height greater than 350 mm or greater than 400 mm, and wherein the fourth layer of structured packing (140), if present, comprises the fourth set of corrugated plates and the fourth set of corrugated plates have a vertical height greater than 350 mm or greater than 400 mm.

Aspect 14. The exchange column according to aspect 13 wherein the third set of corrugated plates have a vertical height less than 1000 mm and wherein the fourth set of corrugated plates, if present, have a vertical height less than 1000 mm.

Aspect 15. The exchange column according to aspect 11 or aspect 12 wherein the third layer of structured packing (130) comprises the third group of two or more sets of corrugated plates, and wherein the two or more sets of corrugated plates of the third group (230) have a combined vertical height greater than 350 mm or greater than 400 mm, and wherein the fourth layer of structured packing (140), if present, comprises the fourth group (240) of two or more sets of corrugated plates (241, 242), and wherein the two or more sets of corrugated plates of the fourth group (240) have a combined vertical height greater than 350 mm or greater than 400 mm.

Aspect 16. The exchange column according to aspect 15 wherein the combined vertical height of the two or more sets of corrugated plates of the third group (230) is less than 7.5 m, or less than 3.5 m, or less than 2.5 m, and wherein the combined vertical height of the two or more sets (241, 242) of corrugated plates of the fourth group (240), if present, is less than 7.5 m, or less than 3.5 m, or less than 2.5 m.

Aspect 17. The exchange column according to any one of aspects 1 to 16 wherein the at least one aperture in each corrugated plate of the first set (111) or first group (210) of corrugated plates have an equivalent diameter ranging from 1 to 5 mm, wherein the at least one aperture in each corrugated plate of the second set (121) or second group (220) of corrugated plates have an equivalent diameter ranging from 1 to 5 mm, wherein the at least one aperture in each corrugated plate of the third set (131) or third group (230) of corrugated plates, if present, have an equivalent diameter ranging from 1 to 5 mm, and wherein the at least one aperture in each corrugated plate of the fourth set (141) or fourth group (240) of corrugated plates, if present, have an equivalent diameter ranging from 1 to 5 mm.

Aspect 18. The exchange column according to any one of aspects 1 to 17 wherein the apertures in each corrugated plate of the first set (111) or first group (210) of corrugated plates create an open area in each corrugated plate of the first set (111) or first group (210) of corrugated plates in the range from 5% to 20%, preferably 8% to 12%, of the total area of each respective corrugated plate, wherein the apertures in each corrugated plate of the second set (121) or second group (220) of corrugated plates create an open area in each corrugated plate of the second set (121) or second group (220) of corrugated plates in the range from 5% to 20%, preferably 8% to 12%, of the total area of each respective corrugated plate, wherein the apertures in each corrugated plate of the third set (131) or third group (230) of corrugated plates, if present, create an open area in each corrugated plate of the third set (131) or third group (230) of corrugated plates in the range from 5% to 20%, preferably 8% to 12%, of the total area of each respective corrugated plate, and wherein the apertures in each corrugated plate of the fourth set (141) or fourth group (240) of corrugated plates, if present, create an open area in each corrugated plate of the fourth set (141) or fourth group (240) of corrugated plates in the range from 5% to 20%, preferably 8% to 12%, of the total area of each respective corrugated plate.

Aspect 19. The exchange column according to any of aspects 1 to 18 wherein the first layer of structured packing (110) has a surface area density ranging from 250 $m^2/m^3$ to 800 $m^2/m^3$ or ranging from 500 $m^2/m^3$ to 675 $m^2/m^3$, and wherein the second layer of structured packing (120) has a surface area density ranging from 250 $m^2/m^3$ to 800 $m^2/m^3$ or ranging from 500 $m^2/m^3$ to 675 $m^2/m^3$.

Aspect 20. The exchange column according to any one of aspects 11 to 19 wherein the third layer of structured packing (130), if present, has a surface area density ranging from 250 $m^2/m^3$ to 800 $m^2/m^3$ or ranging from 500 $m^2/m^3$ to 675 $m^2/m^3$, and wherein the fourth layer of structured packing (140), if present, has a surface area density ranging from 250 $m^2/m^3$ to 800 $m^2/m^3$ or ranging from 500 $m^2/m^3$ to 675 $m^2/m^3$.

Aspect 21. The exchange column according to any one of aspects 1 to 20 wherein at least one corrugated plate in the first layer of structured packing (110) has a surface with a surface texture on at least a portion of its surface.

Aspect 22. The exchange column according to any one of aspects 1 to 21 wherein at least one corrugated plate in the second layer of structured packing (120) has a surface with a surface texture on at least a portion of its surface.

Aspect 23. The exchange column according to any one of aspects 1 to 22 wherein the surface texture on the surface of the at least one corrugated plate in the first layer of structured packing (110) is in the form of horizontal striations and/or dimples.

Aspect 24. The exchange column according to any one of aspects 1 to 23 wherein the surface texture on the surface of the at least one corrugated plate in the second layer of structured packing (120) is in the form of horizontal striations and/or dimples.

Aspect 25. The exchange column according to any one of aspects 11 to 24 wherein at least one corrugated plate in the third layer of structured packing (130), if present, has a surface with a surface texture on at least a portion of its surface, and wherein at least one corrugated plate in the fourth layer of structured packing (140), if present, has a surface with a surface texture on at least a portion of its surface.

Aspect 26. The exchange column according to aspect 25 wherein the surface texture on the surface of the at least one corrugated plate in the third layer of structured packing (130), if present, is in the form of horizontal striations and/or dimples, and wherein the surface texture on the surface of the at least one corrugated plate in the fourth layer of structured packing (140), if present, is in the form of horizontal striations and/or dimples.

Aspect 27. The exchange column according to any one of the preceding aspects wherein the corrugations have a corrugation angle, $\alpha$, relative to the horizontal ranging from about 35° to about 70° or ranging from about 40° to about 60°, and each corrugation when approximated to be a substantially triangular cross-section, has an included angle, angle, $\beta$, ranging from 80° to 110° or ranging from 80° to 95°.

Aspect 28. A method for separating a mixture comprising:

introducing the mixture into the exchange column according to any one of aspects 1 to 27;

contacting the mixture with the first layer of structured packing (110) and the second layer of structured packing (120);

withdrawing a first product from the exchange column; and

withdrawing a second product from the exchange column.

Aspect 29. The method according to aspect 28 wherein the mixture comprises oxygen and nitrogen, and wherein the first product is an oxygen-enriched product and the second product is a nitrogen-enriched product.

Aspect 30. The method according to aspect 28 wherein the mixture comprises oxygen and argon, and wherein the first product is an oxygen-enriched product and the second product is an argon-enriched product.

Aspect 31. The method according to aspect 28 wherein the mixture comprises hydrogen and carbon monoxide, and wherein the first product is a hydrogen-enriched product and the second product is a carbon monoxide-enriched product.

Aspect 32. The method according to aspect 28 wherein the mixture comprises hydrogen and carbon monoxide, and wherein the first product has a $H_2$:CO molar ratio between 0.5:1 and 2.5:1, or between 0.9:1 and 1.5:1, or between 0.9:1 and 1.1:1, and the second product is a hydrogen-enriched product or a carbon monoxide-enriched product.

Aspect 33. A method of making an exchange column, the method comprising:

providing one or more walls of the exchange column, the one or more walls (105) defining one or more volumes within the one or more walls (105), at least one volume of the one or more volumes having a longitudinal axis (101) and a cross section normal to the longitudinal axis (101), the cross section having a diameter, $D$, and an area greater than 0.636 m$^2$;

providing a first layer of structured packing (110), the first layer of structured packing (110) having a height, $h_1$, the first layer of structured packing (110) comprising

(*i-a*) a first set of corrugated plates (111) disposed in vertically parallel relation, each corrugated plate of the first set of corrugated plates (111) having at least one aperture and a plurality of regularly spaced corrugations disposed in crisscrossing relation to the corrugations of an adjacent corrugated plate, the first set of corrugated plates (111) having a vertical height (where the vertical height is in a direction aligned with gravity), wherein the height of the first layer (110) is the vertical height of the first set of corrugated plates (111), or

(*i-b*) a first group (210) of two or more sets of corrugated plates (211, 212), the corrugated plates of each set of the two or more sets (211, 212) disposed in vertically parallel relation, each corrugated plate of each set having at least one aperture and a plurality of regularly spaced corrugations disposed in crisscrossing relation to the corrugations of an adjacent corrugated plate, the two or more sets of corrugated plates (211, 212) of the first group (210) positioned vertically relative to one another (i.e one on top of the other), wherein the corrugated plates of the two or more sets of corrugated plates (211, 212) of the first group (210) are aligned or rotated relative to the corrugated plates of an adjacent set of the two or more sets (211, 212) by less than 5°, or less than 2°, or less than 1°, wherein the two or more sets of corrugated plates (211, 212) of the first group (210) have a combined vertical height (i.e. where the combined vertical height is in a direction aligned with gravity) wherein the height of the first layer (110) is the combined vertical height of the two or more sets of corrugated plates (211, 212) of the first group (210);

providing a second layer of structured packing (120), the second layer of structured packing (120) having a height, $h_2$, the second layer of structured packing (120) comprising

(ii-a) a second set of corrugated plates (121) disposed in vertically parallel relation, each corrugated plate of the second set of corrugated plates (121) having at least one aperture and a plurality of regularly spaced corrugations disposed in crisscrossing relation to the corrugations of an adjacent corrugated plate, the second set of corrugated plates having a vertical height wherein the height of the second layer is the vertical height of the second set of corrugated plates (121), or

(ii-b) a second group (220) of two or more sets of corrugated plates (221, 222), the corrugated plates of each set of the two or more sets (221, 222) of the second group (220) disposed in vertically parallel relation, each corrugated plate of each set of the second group (220) having at least one aperture and a plurality of regularly spaced corrugations disposed in crisscrossing relation to the corrugations of an adjacent corrugated plate, the two or more sets of corrugated plates (221, 222) in the second group (220) positioned vertically relative to one another, wherein the corrugated plates of the two or more sets of corrugated plates (221, 222) of the second group (220) are aligned or rotated relative to the corrugated plates of an adjacent set of the two or more sets (221, 222) of the second group (220) by less than 5°, or less than 2°, or less than 1°, wherein the two or more sets of corrugated plates (221, 222) of the second group (220) have a combined vertical height wherein the height of the second layer (120) is the combined vertical height of the two or more sets of corrugated plates (221, 222) of the second group (220);

wherein at least one of the height of the first layer of structured packing (110) and the height of the second layer of structured packing (120) is greater than 350 mm or greater than 400 mm;

installing the first and second layers of structured packing (110, 120) within the one or more walls of the exchange column such that the first layer of structured packing (110) is located above and adjacent the second layer of structured packing (120), and such that the corrugated plates of the first layer (110) adjacent the corrugated plates of the second layer (120) have an orientation that is rotated at an angle relative to the adjacent corrugated plates of the second layer (120), the angle ranging from 20° to 90° or ranging from 70° to 90°.

Aspect 34. The method of making the exchange column according to claim 33 wherein the height, $h_1$, of the first layer and the diameter, $D$, of the exchange column define a first height-to-diameter ratio, $\dfrac{h_1}{D}$, and the height, $h_2$, of the second layer and the diameter, $D$, of the exchange column define a second height-to-diameter ratio, $\dfrac{h_2}{D}$, wherein at least one of the first height-to-diameter ratio, $\dfrac{h_1}{D}$, and the second height-to-diameter ratio, $\dfrac{h_2}{D}$, range from 0.35 and 0.6, or range from 0.4 to 0.55, or range from 0.45 to 0.55.

Aspect 35. The method of making the exchange column according to aspect 33 or aspect 34 wherein the height of the first layer of structured packing (110) and the height of the second layer of structured packing (120) are greater than 350 mm or greater than 400 mm.

Aspect 36. The method of making the exchange column according to any one of aspects 33 to 35, the method further comprising:

providing a third layer of structured packing (130), the third layer of structured packing (130) comprising

(iii-a) a third set of corrugated plates (131) disposed in vertically parallel relation, each corrugated plate of the third set of corrugated plates (131) having at least one aperture and a plurality of regularly spaced corrugations disposed in crisscrossing relation to the corrugations of an adjacent corrugated plate, or

(iii-b) a third group (230) of two or more sets of corrugated plates (231, 232), the corrugated plates of each set of the two or more sets (231, 232) of the third group (230) disposed in vertically parallel relation, each corrugated plate of each set of the third group (230) having at least one aperture and a plurality of regularly spaced corrugations disposed in crisscrossing relation to the corrugations of an adjacent corrugated plate, the two or more sets of corrugated plates (231, 232) in the third group (230) positioned vertically relative to one another, wherein the corrugated plates of the two or more sets of corrugated plates (231, 232) of the third group (230) are aligned or rotated relative to the corrugated plates of an adjacent set of the two or more sets of the third group (230) by less than 5°, or less than 2°, or less than 1°;

wherein the third layer of structured packing (130) is installed within the one or more walls of the exchange column such that the third layer of structured packing (130) is located below and adjacent the second layer of structured packing (120), and such that the corrugated plates of the third layer (130) adjacent the corrugated plates of the second layer (120) have an orientation that is rotated at an angle relative to the adjacent corrugated plates of the second layer (120), the angle ranging from 20° to 90° or ranging from 70° to 90°.

Aspect 37. The method of making the exchange column according to aspect 36, the method further comprising:

providing a fourth layer of structured packing (140), the fourth layer of structured packing (140) comprising

(iv-a) a fourth set of corrugated plates (141) disposed in vertically parallel relation, each corrugated plate of the fourth set of corrugated plates (141) having at least one aperture and a plurality of regularly spaced corrugations disposed in crisscrossing relation to the corrugations of an adjacent corrugated plate, or

(iv-b) a fourth group (240) of two or more sets of corrugated plates (241, 242), the corrugated plates of each set of the two or more sets (241, 242) of the fourth group (240) disposed in vertically parallel relation, each corrugated plate of each set of the fourth group (240) having at least one aperture and a plurality of regularly spaced corrugations disposed in crisscrossing relation to the corrugations of an adjacent corrugated plate, the two or more sets of corrugated plates (241, 242) in the fourth group (240) positioned vertically relative to one another, wherein the corrugated plates of the two or more sets of corrugated plates (241, 242) of the fourth group (240) are aligned or rotated relative to the corrugated plates of an adjacent set of the two or more sets (241, 242) of the fourth group (240) by less than 5°, or less than 2°, or less than 1°;

wherein the fourth layer of structured packing (140) is installed within the one or more walls of the exchange column such that the fourth layer of structured packing (140) is located below and adjacent the third layer of structured packing (130), and such that the corrugated plates of the fourth layer (140) adjacent the corrugated plates of the third layer (130) have an orientation that is rotated at an angle relative to the adjacent corrugated plates of the third layer (130), the angle ranging from 20° to 90° or ranging from 70° to 90°.

Preferred embodiments of the invention are described with reference to the accompanying figures.

FIG. 1 is a perspective view of a conventional structured packing element.

FIG. 1A is a sectional view of the element in FIG. 1 taken along line 1A-1A.

FIG. 2 is a schematic diagram illustrating the crisscrossing arrangement of adjacent elements in conventional structured packing.

FIG. 3 is a schematic diagram illustrating the conventional use of wall wipers in a packed column.

FIG. 4A is a schematic diagram of a plan view of an arrangement of bricks of structures packing at one elevation at a sectional view taken along line 4A-4A in FIG. 4B.

FIG. 4B is a schematic diagram of an elevation view of an arrangement of a plurality of layers of structured packings between liquid and vapor distributors in a section of a distillation column.

FIG. 5 is a schematic diagram of an elevation view of an arrangement according to the invention of a plurality of layers of structured packing elements of increased height in a section of a distillation column.

FIG. 6 is a schematic diagram of an elevation view of an arrangement according to the invention of a plurality of layers of structured packing elements having pairs of layers that are aligned adjacent a layer that is rotated 90°.

FIG. 7 is a plot of normalized HTU versus effective layer height for separation of an argon/oxygen mixture in a 200 mm diameter column.

FIG. 8 is a plot of normalized HTU versus effective layer height for separation of an argon/oxygen mixture in a 900 mm diameter column.

The ensuing detailed description provides preferred exemplary embodiments only, and is not intended to limit the scope, applicability, or configuration of the invention. Rather, the ensuing detailed description of the preferred exemplary embodiments will provide those skilled in the art with an enabling description for implementing the preferred exemplary embodiments of the invention, it being understood that various changes may be made in the function and arrangement of elements without departing from scope of the invention as defined by the claims.

The articles "a" and "an" as used herein mean one or more when applied to any feature in embodiments of the present invention described in the specification and claims. The use of "a" and "an" does not limit the meaning to a single feature unless such a limit is specifically stated. The article "the" preceding singular or plural nouns or noun phrases denotes a particular specified feature or particular specified features and may have a singular or plural connotation depending upon the context in which it is used.

The adjective "any" means one, some, or all indiscriminately of whatever quantity.

The term "and/or" placed between a first entity and a second entity includes any of the meanings of (1) only the first entity, (2) only the second entity, and (3) the first entity and the second entity. The term "and/or" placed between the last two entities of a list of 3 or more entities means at least one of the entities in the list including any specific combination of entities in this list. For example, "A, B and/or C" has the same meaning as "A and/or B and/or C" and comprises the following combinations of A, B and C: (1) only A, (2) only B, (3) only C, (4) A and B and not C, (5) A and C and not B, (6) B and C and not A, and (7) A and B and C.

The phrase "at least one of" preceding a list of features or entities means one or more of the features or entities in the list of entities, but not necessarily including at least one of each and every entity specifically listed within the list of entities and not excluding any combinations of entities in the list of entities. For example, "at least one of A, B, or C" (or equivalently "at least one of A, B, and C" or equivalently "at least one of A, B, and/or C") has the same meaning as "A and/or B and/or C" and comprises the following combinations of A, B and C: (1) only A, (2) only B, (3) only C, (4) A and B and not C, (5) A and C and not B, (6) B and C and not A, and (7) A and B and C.

The term "plurality" means "two or more than two."

The phrase "at least a portion" means "a portion or all." The at least a portion of a stream may have the same composition with the same concentration of each of the species as the stream from which it is derived. The at least a portion of a stream may have a different concentration of species than that of the stream from which it is derived. The at least a portion of a stream may include only specific species of the stream from which it is derived.

As used herein, "first," "second," "third," etc. are used to distinguish from among a plurality of steps and/or features, and is not indicative of the total number, or relative position in time and/or space unless expressly stated as such.

As used herein, "vertical" and "vertically" have their customary meaning. The vertical direction is aligned with gravity.

The terms "rich" or "enriched" means having a greater mole % concentration of the indicated component than the original stream from which it was formed.

The present invention relates to an exchange column with corrugated structured packing and a method for making and using the exchange column.

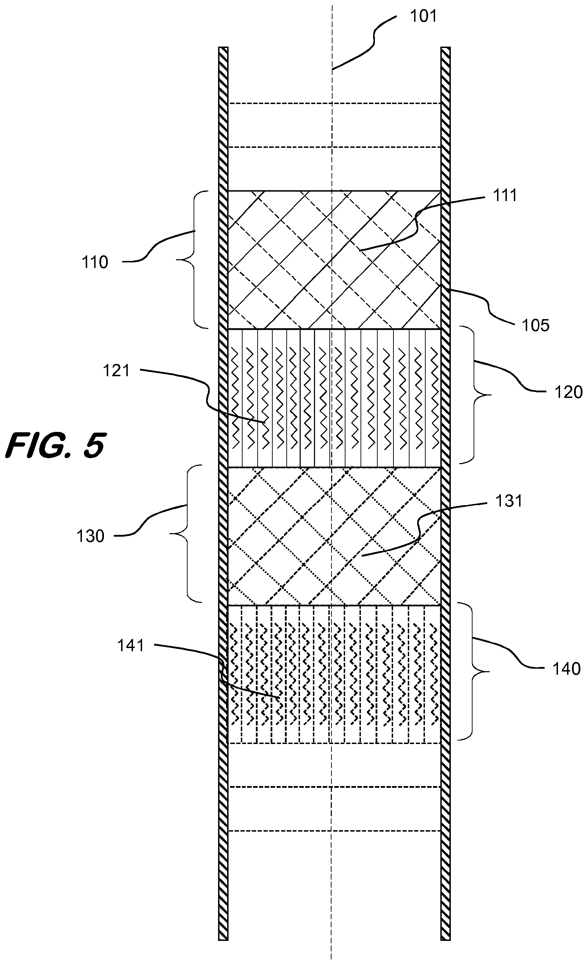

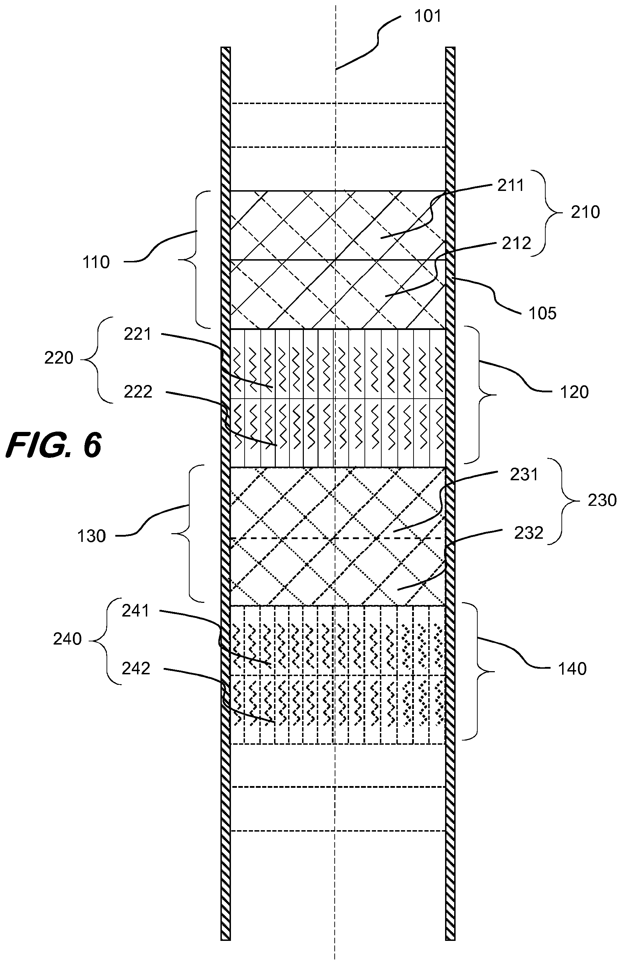

The exchange column with corrugated structured packing is described with reference to FIGS. 5 and 6. The exchange column may be a distillation column, a fractionating column, or the like.

The exchange column comprises one or more walls 105 defining one or more volumes within the one or more walls 105. At least one volume of the one or more volumes has a longitudinal axis 101 and a cross section normal to the longitudinal axis 101 where the cross section has a diameter, $D$, and an area greater than 0.636 $m^2$. The present invention is suitable for any exchange column having a cross-sectional area greater than 0.636 $m^2$ and/or diameters greater than 0.9 m. Exchange columns with large cross sectional areas and large diameters have the technical effect of being able to process a greater quantity of feed into one or more products. The upper limit for the area of the cross section of the exchange column may be limited only by practical limitations of construction and may be, for example, 177 $m^2$, or 40 $m^2$, or 24 $m^2$. The upper limit for the diameter of the exchange column may be for example 15 m, 7.1 m, or 5.5 m.

The one or more volumes defined by the one or more walls of an exchange column are simply the interior cross-sectional area multiplied by the height of the respective column section. The at least one volume of the one or more volumes is the interior cross-sectional area multiplied by the height containing the structured packing layers.

The cross section of the exchange column may be circular. The diameter refers to the internal (inner) diameter of the exchange column. In case the exchange column does not have a circular cross section, for example an oval, the diameter is the equivalent diameter,

$D_{equivalent}$, defined as $D_{equivalent} = \sqrt{\dfrac{4 \times A}{\pi}}$, where

$A$ is the cross-sectional area of the exchange column.

The exchange column has a height dimension, which extends in the same direction as the longitudinal axis, which is vertical (i.e. aligned in the direction of gravity).

The exchange column may be a cylindrically-shaped column such as described for example in US 6,357,728 B1, incorporated herein by reference. The exchange column may be a divided wall column as described, for example, in US 7,357,378 B2, incorporated herein by reference. The one or more walls 105 may define the two or more volumes containing packing as found in a divided wall column. The exchange column may be a side-arm column as known in the prior art, for example, US 4,994,098 A, US 4,983,194 A, and US 5,970,743 A, each incorporated herein by reference.

The exchange column comprises a first layer of structured packing 110 disposed within the at least one volume. The first layer has a height, $h_1$. The first layer of structured packing 110 comprises either (*i-a*) a first set of corrugated plates 111 or (*i-b*) a first group 210 of two more sets of corrugated plates 211, 212, where the first group 210 of two or more sets of corrugated plates 211, 212 are oriented to provide the equivalent function as a single set corrugated plates.

The first set of corrugated plates 111 is a set of corrugated plates disposed in vertically parallel relation.

Corrugated plates in a set disposed in vertically parallel relation are corrugated plates that are arranged side-by-side and each corrugated plate in the set has a lower end and an upper end and a length extending from the lower end to the upper end where each corrugated plate in the set has a vertical height where the vertical height is a height in a direction aligned with gravity, wherein the length of each corrugated plate equals the vertical height of each respective corrugated plate of the set. It could also be said that the plane of each corrugated plate in the set are substantially parallel to the longitudinal axis of the exchange column.

Each corrugated plate of the first set of corrugated plates 111 has at least one aperture and a plurality of regularly spaced corrugations disposed in crisscrossing relation to the corrugations of an adjacent corrugated plate.

As used herein an "aperture" is a perforation, or hole in the corrugated plate itself. As known from the prior art, apertures aid liquid/vapor spreading on the surface of foil, thus improving the heat and mass transfer efficiency of the packing.

The first set of corrugated plates 111 have a vertical height where the vertical height is in a direction aligned with gravity. When the first layer 110 comprises the first set of corrugated plates 111, the height of the first layer 110 is the vertical height of the first set of corrugated plates 111. The vertical height of the first set of corrugated plates 111 may be greater than 350 mm or greater than 400 mm. The height dimension of the corrugated plates corresponds to (aligns with) the height dimension of the exchange column. The upper limit for the vertical height may be limited by practical considerations and may be as high as 1000 mm.

The first set of corrugated plates 111 comprises a plurality of corrugated plates. The first set of corrugated plates 111 may comprise a plurality of from 50 to 5,000 corrugated plates or from 75 to 4000 corrugated plates. At least one corrugated plate in the first set of corrugated plates may have a surface with a surface texture on at least a portion of its surface. The surface texture on the surface of the at least one corrugated plate may be in the form of horizontal striations and/or dimples, and/or any other surface texture known in the art. The first set of corrugated plates 111 may be part of a "brick." The first set of corrugated plates may comprise multiple bricks.

The at least one aperture in each corrugated plate of the first set of corrugated plates may have an equivalent diameter ranging from 1 to 5 mm. An equivalent diameter of an aperture is the diameter of a circle having the same open area as the aperture. The apertures in each corrugated plate of the first set of corrugated plates 111 may create an open area in each corrugated plate of the first set of corrugated plates 111 in the range from 5% to 20%, preferably 8% to 12%, of the total area of each respective corrugated plate.

The first group 210 of two or more sets of corrugated plates 211, 212 is a group of two or more sets of corrugated plates, where the corrugated plates of each set of the two or more sets 211, 212 disposed in vertically parallel relation. Each corrugated plate of each set has at least one aperture and a plurality of regularly spaced corrugations disposed in crisscrossing relation to the corrugations of an adjacent corrugated plate. The two or more sets of corrugated plates 211, 212 of the first group 210 are positioned vertically relative to one another (i.e. one on top of the other), where the corrugated plates of the two or more sets of corrugated plates 211,212 of the first group 210 are aligned or rotated relative to the corrugated plates of an adjacent set of the two or more sets 211, 212 by less than 5°, or less than 2°, or less than 1°. The two or more sets of corrugated plates 211, 212 of the first group 210 have a combined vertical height where the combined vertical height is in a direction aligned with gravity. When the first layer 110 comprises the two or more sets of corrugated plates 211, 212 of the first group 210, the height of the first layer 110 is the combined vertical height of the two or more sets of corrugated plates 211, 212 of the first group 210. The combined vertical height of the two or more sets of corrugated plates 211, 212 of the first group 210 may be greater than 350 mm or greater than 400 mm. The upper limit for the combined vertical height may be limited by practical considerations and may be as high as 2.5 m, or 3.5 m, or 7.5 m.

The at least one aperture in each corrugated plate of the first group of two or more sets of corrugated plates may have an equivalent diameter ranging from 1 to 5 mm. The apertures in each corrugated plate of the first group 210 of corrugated plates 211, 212 may create an open area in each corrugated plate of the first group 210 of corrugated plates 211, 212 in the range from 5% to 20%, preferably 8% to 12%, of the total area of each respective corrugated plate.

Each set of the two or more sets of corrugated plates of the first group 210 comprises a plurality of corrugated plates. Each set of the two or more sets of corrugated plates of the first group 210 may comprise a plurality of from 50 to 5000 corrugated plates or from 75 to 4000 corrugated plates. At least one corrugated plate in the first group of corrugated plates may have a surface with a surface texture on at least a portion of its surface. The surface texture on the surface of the at least one corrugated plate may be in the form of horizontal striations and/or dimples, and/or any other surface texture known in the art. Each set of the two or more sets of corrugated plates of the first group 210 may be part of a brick. The first group 210 may comprise multiple bricks.

A set of corrugated plates above an adjacent set of corrugated plates of the first group may be aligned or rotated such that the two or more sets of corrugated plates provide the equivalent function as a single set of corrugated plates of equivalent height. A set of corrugated plates above an adjacent set of corrugated plates of the first group may be aligned or rotated within 5°, or within 2°, or within 1° clockwise or counterclockwise of a set of corrugated plates below. In this orientation, the two or more sets of corrugated plates provide the equivalent function as a single set of corrugated plates of equivalent height.

The first layer of structured packing may have a surface area density ranging from 250 $m^2/m^3$ to 800 $m^2/m^3$ or ranging from 500 $m^2/m^3$ to 675 $m^2/m^3$.

The exchange column comprises a second layer of structured packing 120 disposed within the at least one volume. The second layer of structured packing 120 is located below and adjacent the first layer of structured packing 110. The second layer has a height, $h_2$. The second layer of structured packing 120 comprises either (ii-a) a second set of corrugated plates 121 or (ii-b) a second group 220 of two more sets of corrugated plates 221, 222, where the second group 220 of two or more sets of corrugated plates 221, 222 are oriented to provide the equivalent function as a single set corrugated plates.

The second layer 120 may be installed in the exchange column prior to the first layer 110 being installed. When the first layer is installed, the first layer 110 is rotated relative to the second layer. The corrugated plates of the first layer 110 adjacent the corrugated plates of the second layer 120 have an orientation that is rotated at an angle relative to the adjacent corrugated plates of the second layer 120, the angle ranging from 20° to 90°, or ranging from 70° to 90°, or about 90°. The corrugated plates of the first layer 110 adjacent the corrugated plates of the second layer 120 may be rotated 20° to 90°, or 70° to 90°, or about 90° clockwise or counterclockwise relative to the adjacent corrugated plates of the second layer 120.

The second set of corrugated plates 121 is a set of corrugated plates disposed in vertically parallel relation. Each corrugated plate of the second set of corrugated plates 121 has at least one aperture and a plurality of regularly spaced corrugations disposed in crisscrossing relation to the corrugations of an adjacent corrugated plate. The second set of corrugated plates 121 have a vertical height where the vertical height is in a direction aligned with gravity. When the second layer 120 comprises the second set of corrugated plates 121, the height of the second layer is the height of the second set of corrugated plates 212. The vertical height of the second set of corrugated plates 121 may be greater than 350 mm or greater than 400 mm. The upper limit for the vertical height may be limited only by practical considerations and may be as high as 1000 mm. The height dimension of the second set of corrugated plates corresponds to the height dimension of the exchange column.

The at least one aperture in each corrugated plate of the second set of corrugated plates 121 may have an equivalent diameter ranging from 1 to 5 mm. The apertures in each corrugated plate of the second set of corrugated plates 121 may create an open area in each corrugated plate of the second set of corrugated plates 121 in the range from 5% to 20%, preferably 8% to 12%, of the total area of each respective corrugated plate.

The second set of corrugated plates 121 comprises a plurality of corrugated plates. The second set of corrugated plates 121 may comprise a plurality of from 50 to 5000 corrugated plates or from 75 to 4000 corrugated plates. At least one corrugated plate in the second set of corrugated plates may have a surface with a surface texture on at least a portion of its surface. The surface texture on the surface of the at least one corrugated plate may be in the form of horizontal striations and/or dimples, and/or any other surface texture known in the art. The second set of corrugated plates 121 may be part of a "brick." The second set of corrugated plates may comprise multiple bricks.

The second group 220 of two or more sets of corrugated plates 221, 222 is a group of two or more sets of corrugated plates, where the corrugated plates of each set of the two or more sets 221, 222 disposed in vertically parallel relation. Each corrugated plate of each set has at least one aperture and a plurality of regularly spaced corrugations disposed in crisscrossing relation to the corrugations of an adjacent corrugated plate. The two or more sets of corrugated plates 221, 222 of the second group 220 are positioned vertically relative to one another (i.e. one on top of the other), where the corrugated plates of the two or more sets of corrugated plates 221, 222 of the second group 220 are aligned or rotated relative to the corrugated plates of an adjacent set of the two or more sets 221, 222 by less than 5°, or less than 2°, or less than 1°. The two or more sets of corrugated plates 221, 222 of the second group (220) have a combined vertical height. When the second layer 120 comprises the two or more sets of corrugated plates 221, 222, the height of the second layer 120 is the combined vertical height of the two or more sets of corrugated plates 221, 222 of the second group 220. The combined vertical height of the two or more sets of corrugated plates 221, 222 of the second group 220 may be greater than 350 mm or greater than 400 mm. The upper limit for the combined vertical height may be limited only by practical considerations and may be as high as 2.5 m, or 3.5 m, or 7.5 m.

The at least one aperture in each corrugated plate of the second group 220 of two or more corrugated plates 221, 222 may have an equivalent diameter ranging from 1 to 5 mm. The apertures in each corrugated plate of the second group 220 of corrugated plates 221, 222 may create an open area in each corrugated plate of the second group 220 of corrugated plates 221, 222 in the range from 5% to 20%, preferably 8% to 12%, of the total area of each respective corrugated plate.

Each set of the two or more sets of corrugated plates of the second group 220 comprises a plurality of corrugated plates. Each set of the two or more sets of corrugated plates of the second group 220 may comprise a plurality of from 50 to 5000 corrugated plates or from 75 to 4000 corrugated plates. At least one corrugated plate in the second group of corrugated plates may have a surface with a surface texture on at least a portion of its surface. The surface texture on the surface of the at least one corrugated plate may be in the form of horizontal striations and/or dimples, and/or any other surface texture known in the art. Each set of the two or more sets of corrugated plates of the second group 220 may be part of a brick. The second group 220 may comprise multiple bricks.

A set of corrugated plates above an adjacent set of corrugated plates of the second group may be aligned or rotated within 1° clockwise or counterclockwise of a set of corrugated plates below. In this orientation, the two or more sets of corrugated plates provide the equivalent function as a single set of corrugated plates of equivalent height.

The second layer of structured packing may have a surface area density ranging from 250 m²/m³ to 800 m²/m³ or ranging from 500 m²/m³ to 675 m²/m³.

The exchange column is characterized by a first layer of structured packing 110 above and adjacent a second layer of structured packing 120 where the corrugated plates of the first layer 110 have an orientation that is rotated at an angle relative to the adjacent corrugated plates of the second layer, the angle ranging from 20° to 90°, and where the height of the first layer 110 and/or the height of second layer 120 is greater than 350 mm or greater than 400 mm.

In addition, the structured packing arrangement may be characterized by a first height-to-diameter ratio, $\dfrac{h_1}{D}$, and a second height-to-diameter ratio, $\dfrac{h_2}{D}$, where at least one of the first height-to-diameter ratio, $\dfrac{h_1}{D}$, and the second height-to-diameter ratio, $\dfrac{h_2}{D}$, range from 0.35 and 0.6, or range from 0.4 to 0.55, or range from 0.45 to 0.55.

In contrast, as described in the Background section, the prior art (for example Perry's Chemical Engineer's Handbook, and books by Kister) has limited the vertical height of layers of structured packing to about 300 mm (12 inches). However, the inventors have discovered that for exchange columns having a large cross-sectional area, e.g. having a cross-sectional area greater than about 0.636 m², or diameters greater than 0.9 m, vertical heights greater than about 350 mm (13.8 in.) provide improved performance.

It means that the height-to-diameter ratio is an important parameter to consider when designing, manufacturing and installing structure packing in columns to achieve optimal process performance. The prior art does not discuss or teach any ranges in height-to-diameter ratios to achieve optimal process performance. Since the vertical height of a layer of structured packing has heretofore been limited to 300 mm, the height-to-diameter ratio has been limited to less than 0.33 for columns having a diameter greater than 0.9 m.

The exchange column may optionally comprise a third layer of structured packing 130 having a height, $h_3$, disposed within the at least one volume, and may further optionally comprise a fourth layer of structured packing 140 having a height, $h_4$, disposed within the at least one volume. The third layer of structured packing 130 and the fourth layer of structured packing 140 are optional. The exchange column may comprise any desired number of additional layers of structured packing.

The third layer of structured packing 130, if present, is located below and adjacent the second layer of structured packing 120. The third layer of structured packing 130 comprises either (*iii-a*) a third set of corrugated plates 131 or (*iii-b*) a third group 230 of two more sets of corrugated plates 231, 232, where the third group 230 of two or more sets of corrugated plates 231, 232 are oriented to provide the equivalent function as a single set corrugated plates. The corrugated plates of the third layer 130 adjacent the corrugated plates of the second layer 120 have an orientation that is rotated at an angle relative to the adjacent corrugated plates of the second layer 120, the angle ranging from 20° to 90°, or ranging from 70° to 90°, or about 90°. The corrugated plates of the third layer 130 adjacent the corrugated plates of the second layer 120 may have an orientation that is rotated 20° to 90°, or 70° to 90°, or about 90° clockwise or counterclockwise relative to the adjacent corrugated plates of the second layer 120.

The third set of corrugated plates 131 is a set of corrugated plates disposed in vertically parallel relation, each corrugated plate of the third set of corrugated plates 131 having at least one aperture and a plurality of regularly spaced corrugations disposed in crisscrossing relation to the corrugations of an adjacent corrugated plate. The third set of corrugated plates 131 have a vertical height. When the third layer 130 comprises the third set of corrugated plates 131, the height of the third layer is the height of the third set of corrugated plates 131. The vertical height of the third set of corrugated plates 131 may be greater than 350 mm or greater than 400 mm. The upper limit for the vertical height may be limited only by practical considerations and may be as high as 1000 mm. The height dimension of the third set of corrugated plates corresponds to the height dimension of the exchange column.

The at least one aperture in each corrugated plate of the third set of corrugated plates 131 may have an equivalent diameter ranging from 1 to 5 mm. The apertures in each corrugated plate of the third set of corrugated plates 131 may create an open area in each corrugated plate of the third set of corrugated plates 131 in the range from 5% to 20%, preferably 8% to 12%, of the total area of each respective corrugated plate.

The third set of corrugated plates 131 comprises a plurality of corrugated plates. The third set of corrugated plates 131 may comprise a plurality of from 50 to 5000 corrugated plates or from 75 to 4000 corrugated plates. At least one corrugated plate in the third set of corrugated plates 131 may have a surface with a surface texture on at least a portion of its surface. The surface texture on the surface of the at least one corrugated plate may be in the form of horizontal striations and/or dimples, and/or any other surface texture known in the art. The third set of corrugated plates 131 may be part of a "brick." The third set of corrugated plates 131 may comprise multiple bricks.

The third group 230 of two or more sets of corrugated plates 231, 232 is a group of two or more sets of corrugated plates, where the corrugated plates of each set of the two or more sets 231,232 disposed in vertically parallel relation. Each corrugated plate of each set has at least one aperture and a plurality of regularly spaced corrugations disposed in crisscrossing relation to the corrugations of an adjacent corrugated plate. The two or more sets of corrugated plates 231, 232 of the third group 230 are positioned vertically relative to one another (i.e. one on top of the other), where the corrugated plates of the two or more sets of corrugated plates 231, 232 of the third group 230 are aligned or rotated relative to the corrugated plates of an adjacent set of the two or more sets 231, 232 by less than 5°, or less than 2°, or less than 1°. The two or more sets of corrugated plates 231, 232 of the third group 230 have a combined vertical height where the combined vertical height is in a direction aligned with gravity. When the third layer 130 comprises the two or more sets of corrugated plates 231, 232, the height of the third layer 130 is the combined vertical height of the two or more sets of corrugated plates 231, 232 of the third group 230. The combined vertical height of the two or more sets of corrugated plates 231, 232 of the third group 230 may be greater than 350 mm or greater than 400 mm. The upper limit for the combined vertical height may be limited only by practical considerations and may be as high as 2.5 m, or 3.5 m, or 7.5 m.

The at least one aperture in each corrugated plate of the third group 230 of two or more corrugated plates 231, 232 may have an equivalent diameter ranging from 1 to 5 mm. The apertures in each corrugated plate of the third group 230 of corrugated plates 231, 232 may create an open area in each corrugated plate of the third group 230 of corrugated plates 231, 232 in the range from 5% to 20%, preferably 8% to 12%, of the total area of each respective corrugated plate.

Each set of the two or more sets of corrugated plates of the third group 230 comprises a plurality of corrugated plates. Each set of the two or more sets of corrugated plates of the third group 230 may comprise a plurality of from 50 to 5,000 corrugated plates or from 75 to 4000 corrugated plates. At least one corrugated plate in the third group of corrugated plates may have a surface with a surface texture on at least a portion of its surface. The surface texture on the surface of the at least one corrugated plate may be in the form of horizontal striations and/or dimples, and/or any other surface texture known in the art. Each set of the two or more sets of corrugated plates of the third group 230 may be part of a brick. The third group 230 may comprise multiple bricks.

A set of corrugated plates above an adjacent set of corrugated plates of the third group may be aligned or rotated within 1° clockwise or counterclockwise of a set of corrugated plates below. In this orientation, the two or more sets of corrugated plates provide the equivalent function as a single set of corrugated plates of equivalent height.

The third layer of structured packing may have a surface area density ranging from 250 m²/m³ to 800 m²/m³ or ranging from 500 m²/m³ to 675 m²/m³.

The third layer may have a height, $h_3$, where the height-to-diameter ratio, $\dfrac{h_3}{D}$, ranges from 0.35 and 0.6, or range from 0.4 to 0.55, or range from 0.45 to 0.55.

The fourth layer of structured packing 140, if present, is located below and adjacent the third layer of structured packing 130, if present. The fourth layer of structured packing 140 comprises either (*iv-a*) a fourth set of corrugated plates 141 or (*iv-b*) a fourth group 240 of two more sets of corrugated plates 241, 242, where the fourth group 240 of two or more sets of corrugated plates 241, 242 are oriented to provide the equivalent function as a single set corrugated plates. The corrugated plates of the fourth layer 140 adjacent the corrugated plates of the third layer 130 have an orientation that is rotated at an angle relative to the adjacent corrugated plates of the third layer 130, the angle ranging from 20° to 90°, or ranging from 70° to 90°, or about 90°. The corrugated plates of the fourth layer 140 adjacent the corrugated plates of the third layer 130 may have an orientation that is rotated 20° to 90°, or 70° to 90°, or about 90° clockwise or counterclockwise relative to the adjacent corrugated plates of the third layer 130.

The fourth set of corrugated plates 141 is a set of corrugated plates disposed in vertically parallel relation, each corrugated plate of the fourth set of corrugated plates 141 having at least one aperture and a plurality of regularly spaced corrugations disposed in crisscrossing relation to the corrugations of an adjacent corrugated plate. The fourth set of corrugated plates 141 have a vertical height. When the fourth layer 140 comprises the fourth set of corrugated plates 141, the height of the fourth layer 140 is the height of the fourth set of corrugated plates 141. The vertical height of the fourth set of corrugated plates 141 may be greater than 350 mm or greater than 400 mm. The upper limit for the vertical height may be limited only by practical considerations and may be as high as 1000 mm. The height dimension of the fourth set of corrugated plates correlates to the height dimension of the exchange column.

The at least one aperture in each corrugated plate of the fourth set of corrugated plates 141 may have an equivalent diameter ranging from 1 to 5 mm. The apertures in each corrugated plate of the fourth set of corrugated plates 141 may create an open area in each corrugated plate of the fourth set of corrugated plates 141 in the range from 5% to 20%, preferably 8% to 12%, of the total area of each respective corrugated plate.

The fourth set of corrugated plates 141 comprises a plurality of corrugated plates. The fourth set of corrugated plates 141 may comprise a plurality of from 50 to 5000 corrugated plates or from 75 to 4000 corrugated plates. At least one corrugated plate in the fourth set of corrugated plates 141 may have a surface with a surface texture on at least a portion of its surface. The surface texture on the surface of the at least one corrugated plate may be in the form of horizontal striations and/or dimples, and/or any other surface texture known in the art. The fourth set of corrugated plates 141 may be part of a "brick." The fourth set of corrugated plates 141 may comprise multiple bricks.

The fourth group 240 of two or more sets of corrugated plates 241, 242 is a group of two or more sets of corrugated plates, where the corrugated plates of each set of the two or more sets 241, 242 disposed in vertically parallel relation. Each corrugated plate of each set has at least one aperture and a plurality of regularly spaced corrugations disposed in crisscrossing relation to the corrugations of an adjacent corrugated plate. The two or more sets of corrugated plates 241, 242 of the fourth group 240 are positioned vertically relative to one another (i.e. one on top of the other), where the corrugated plates of the two or more sets of corrugated plates 241, 242 of the fourth group 240 are aligned or rotated relative to the corrugated plates of an adjacent set of the two or more sets 241, 242 by less than 5°, or less than 2°, or less than 1°. The two or more sets of corrugated plates 241, 242 of the fourth group 240 have a combined vertical height. When the fourth layer 140 comprises the two or more sets of corrugated plates 241, 242, the height of the fourth layer is the combined vertical height of the two or more sets of corrugated plates 241, 242 of the fourth group 240. The combined vertical height of the two or more sets of corrugated plates 241, 242 of the fourth group 240 may be greater than 350 mm or greater than 400 mm. The upper limit for the combined vertical height may be limited only by practical considerations and may be as high as 2.5 m, or 3.5 m, or 7.5 m.

The at least one aperture in each corrugated plate of the fourth group 240 of two or more corrugated plates 241, 242 may have an equivalent diameter ranging from 1 to 5 mm. The apertures in each corrugated plate of the fourth group 240 of corrugated plates 241, 242 may create an open area in each corrugated plate of the fourth group 240 of corrugated plates 241, 242 in the range from 5% to 20%, preferably 8% to 12%, of the total area of each respective corrugated plate.

Each set of the two or more sets of corrugated plates of the fourth group 240 comprises a plurality of corrugated plates. Each set of the two or more sets of corrugated plates of the fourth group 240 may comprise a plurality of from 50 to 5000 corrugated plates or from 75 to 4000 corrugated plates. At least one corrugated plate in the fourth group of corrugated plates may have a surface with a surface texture on at least a portion of its surface. The surface texture on the surface of the at least one corrugated plate may be in the form of horizontal striations and/or dimples, and/or any other surface texture known in the art. Each set of the two or more sets of corrugated plates of the fourth group 240 may be part of a brick. The fourth group 240 may comprise multiple bricks.

A set of corrugated plates above an adjacent set of corrugated plates of the fourth group may be aligned or rotated within 1° clockwise or counterclockwise of a set of corrugated plates below. In this orientation, the two or more sets of corrugated plates provide the equivalent function as a single set of corrugated plates of equivalent height.

The fourth layer of structured packing 140 may have a surface area density ranging from 250 m²/m³ to 800 m²/m³ or ranging from 500 m²/m³ to 675 m²/m³.

The fourth layer may have a height, $h_4$, where the height-to-diameter ratio, $\dfrac{h_4}{D}$, ranges from 0.35 and 0.6, or range from 0.4 to 0.55, or range from 0.45 to 0.55.

The method for separating a mixture comprises introducing the mixture into any exchange column as described above. The exchange column has the required features as described above, and may have any of the optional features.

The method for separating the mixture further comprises contacting the mixture with the first layer of structured packing 110 and the second layer of structured packing 120, withdrawing a first product from the exchange column, and withdrawing a second product from the exchange column.

The mixture may comprise oxygen and nitrogen, for example, a mixture formed from air. The first product may be an oxygen-enriched product and the second product may be a nitrogen-enriched product.

The mixture may comprise oxygen and argon, for example, a mixture formed from air. The first product may be an oxygen-enriched product and the second product may be an argon-enriched product.

The mixture may comprise hydrogen and carbon monoxide, for example a gas mixture from a steam-hydrocarbon reformer or partial oxidation reactor. The first product may be a hydrogen-enriched product and the second product may be a carbon monoxide-enriched product. The exchange column may be used to form an oxo-gas, that is, a mixture containing a desired ratio of hydrogen to carbon monoxide. The first product may have a $H_2$:CO molar ratio between 0.5:1 and 2.5:1, or between 0.9:1 and 1.5:1, or between 0.9:1 and 1.1:1, and the second product may be a hydrogen-enriched product or a carbon monoxide-enriched product.

The present invention also relates to a method of making an exchange column, where the exchange column has the required features as described above and may have any of the optional features.

The method of making the exchange column comprises providing the one or more walls of the exchange column; providing the first layer of structured packing 110 where the first layer of structured packing 110 has any of the features as described above; and providing the second layer of structured packing 120, where the second layer of structured packing 120 has any of the features as described above.

The method of making the exchange column also comprises installing the first and second layers of structured packing 110, 120 within the one or more walls of the exchange column such that the first layer of structured packing 110 is located above and adjacent the second layer of structured packing 120, and such that the corrugated plates of the first layer 110 adjacent the corrugated plates of the second layer 120 have an orientation that is rotated at an angle relative to the adjacent corrugated plates of the second layer 120, the angle ranging from 20° to 90° or ranging from 70° to 90°.

The method of making the exchange column may also comprise providing a third layer of structured packing 130 where the third layer of structured packing 130 has any of the features as described above, and installing the third layer of structured packing within the one or more walls of the exchange column such that the third layer of structure packing 130 is located below and adjacent the second layer of structure packing 120, wherein the corrugated plates of the third layer 130 adjacent the corrugated plates of the second layer 120 have an orientation that is rotated at an angle relative to the adjacent corrugated plates of the second layer 120, the angle ranging from 20° to 90° or ranging from 70° to 90°.

The method of making the exchange column may also comprise providing a fourth layer of structured packing 140 where the fourth layer of structured packing 140 has any of the features as described above, and installing the fourth layer of structured packing 140 within the one or more walls of the exchange column such that the fourth layer of structure packing 140 is located below and adjacent the third layer of structure packing 130, wherein the corrugated plates of the fourth layer 140 adjacent the corrugated plates of the third layer 130 have an orientation that is rotated at an angle relative to the adjacent corrugated plates of the third layer 130, the angle ranging from 20° to 90° or ranging from 70° to 90°.

Example 1 - Comparative Example

Cryogenic experiments were performed in a laboratory distillation column with an internal diameter of about 203 mm, having a corresponding cross sectional area of 0.0324 m². Several packing layers with a surface area density of 500 m²/m³ were placed on top of each other to create various packed bed heights in the ranging from 1648 mm to 1890 mm. The individual packing layers had a layer height of 52.5 mm, 103 mm, or 207 mm. In some experiments, all layers of packing were rotated at an angle of 90 degrees relative to the layers above and below them. In these cases, the effective layer height is the same as the packing layer height.

In some experiments, layers were rotated as a group, two or more at a time, such that the layers within the group were aligned with each other in terms of the orientation of their respective corrugation elements. In these cases, the effective layer height is accordingly 2 or more times the respective plate height depending on the number of layers that are aligned.

The column was operated to perform separation of a binary argon/oxygen mixture at a pressure of about 141 kPa (0.4 barg) and under total internal reflux. This made the liquid to vapor flow ratio within the column, commonly referred to as the L/V ratio, equal to 1. After reaching steady state at a variety of flow conditions, the data were reduced in terms of HTU versus a reduced vapor velocity. Then a characteristic HTU was found for each run at a common vapor velocity that would be representative of the operating conditions in industrial distillation columns. All such values were then normalized by dividing each value by the HTU obtained for the 207 mm layer height packing as this is a very commonly used layer height in the industry.

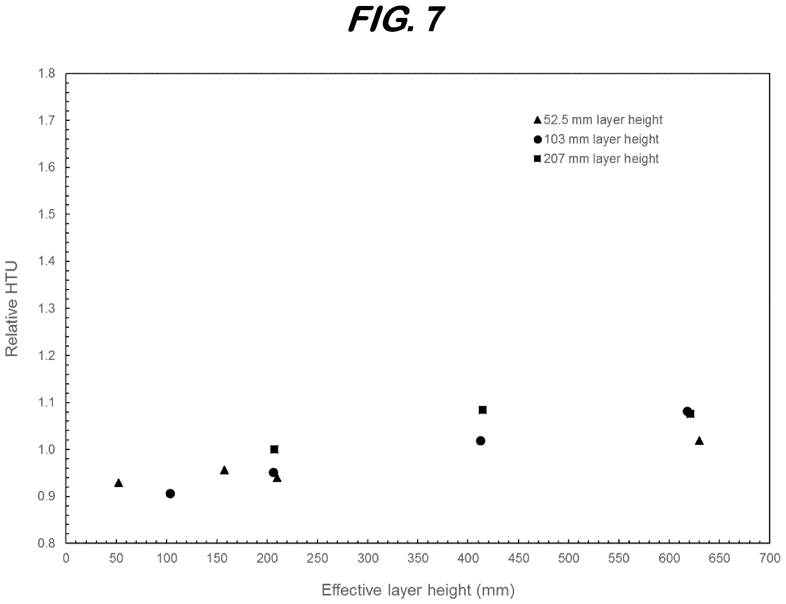

The results for the 203 mm diameter column are shown in FIG. 7. The results show an optimum for the effective layer height of about 100 mm where the relative HTU goes to a minimum compared to values at other effective layer heights.

Several observations can be made.

The optimum layer height of about 100 mm is much smaller than the commonly used layer height of about 200 mm to 250 mm in industrial scale distillation columns. This is the result in this small laboratory column which has a diameter of about 200 mm. It is believed that such an optimum occurs due to a complex interplay of several physical parameters and operational characteristics of the vapor and liquid flow over a packed section. Under uniform flow distribution conditions, structured packing has an inherent mass transfer efficiency along with an associated pressure drop within its individual cells which are formed by the opposing corrugations. But even when liquid and vapor are introduced very uniformly at the top and bottom respectively of a packed bed, maldistribution develops naturally thereby degrading the performance. The effect of such maldistribution is mitigated by any lateral spreading of both vapor and liquid, and this happens more easily within a small diameter column such as 203 mm or less for instance as opposed to a large diameter column of industrial significance such as 900 mm or more.

In addition to the above general effects there are some specific effects which can trade off against each other. A smaller effective layer height which results in more frequent layer rotations leads to better lateral spreading of both liquid and vapor which would be beneficial. There will also be an increase in the vapor phase mass transfer coefficients in the entrance zone where vapor enters each layer and this effect is beneficial. This effect would be more pronounced any time there is also a significant layer rotation such as at 90 degrees in addition to a layer transition. In contrast, any time there is a layer transition, the dripping of liquid from an upper layer to a lower layer would tend to disrupt the liquid distribution near the entrance zone resulting in degradation of the liquid phase mass transfer in this entrance zone. This effect would be deleterious to the overall mass transfer efficiency of the column.

In Example 1 when the effective layer height is 618-630 mm, there are only three such effective layers in the bed that are rotated relative to each other at 90 degrees. This leads to less lateral spreading of both the vapor and liquid phases thereby resulting in a relatively high relative HTU of about 1.02 to 1.08. As the effective layer height is reduced, the relative HTU improves due to more spreading and more local vapor phase entrance enhancement which dominate over other effects. The optimum value for the relative HTU is about 0.91 which occurs at an effective layer height 103 mm. But when the effective layer height is reduced further to 52.5 mm the relative HTU turns up and increases to a value of 0.93. This occurs due to the presence of too many layer transitions where liquid entrance is disrupted leading to an overall decrease in mass transfer efficiency which now dominates over the other known good effects of more frequent layer rotations.

Another interesting observation from Example 1 is that the relative HTU's for the 207 mm layer height packing is for the most part, slightly higher compared to the corresponding values with equivalent effective layer heights for the 52.5 mm and 103 mm layer height packing with its layers rotated in multiples. For example, at an effective layer height of 206 to 210 mm, the relative HTU of 207 mm layer height packing is 1.0 compared to the values of 0.95 and 0.94 for the 103 and 52.5 mm layer height packing, respectively. The only difference between these runs are extra layer transitions without rotation within each effective layer height with the 52.5 mm and 103 mm layer height packing. This implies that the vapor phase mass transfer enhancement at these transitions without rotation is more beneficial than the liquid phase degradation that also occurs at these transitions. This is plausible as the liquid phase maldistribution effect in a column which is only 200 mm in diameter would not be too severe to compensate for with other means.

Example 2

Cryogenic experiments were performed in a laboratory distillation column with an internal diameter of about 900 mm, corresponding to a cross-sectional area of 0.636 m$^2$. Several packing layers with a surface area density of 500 m$^2$/m$^3$ were placed on top of each other to create a packed bed height of about 4550 mm. The individual packing layers had a layer height of 103 mm or 207 mm. Two types of experiments were conducted with each packing. In the first type of experiment, all the layers were rotated at an angle of 90 degrees relative to the layers above and below them. In these cases, the effective layer height is the same as the corresponding layer height. In the second type of experiment, layers were rotated in pairs and/or multiples of three, such that the layers within the pair or multiple were aligned with each other in terms of the orientation of their respective corrugation elements. In these cases, the effective layer height is 2 times the nominal packing layer height of the individual layers and thus 206 mm for a pair of 103 mm layers and 414 mm for a pair of 207 mm layers and 621 mm for a multiple of three 207 mm layers. The column was operated to perform separation of a binary argon/oxygen mixture at a pressure of about 141 kPa (0.4 barg) and under total internal reflux in a manner similar to that of Example 1 and the data were also normalized by dividing each value by the HTU obtained for the 207 mm layer height packing as was done for FIG. 7.

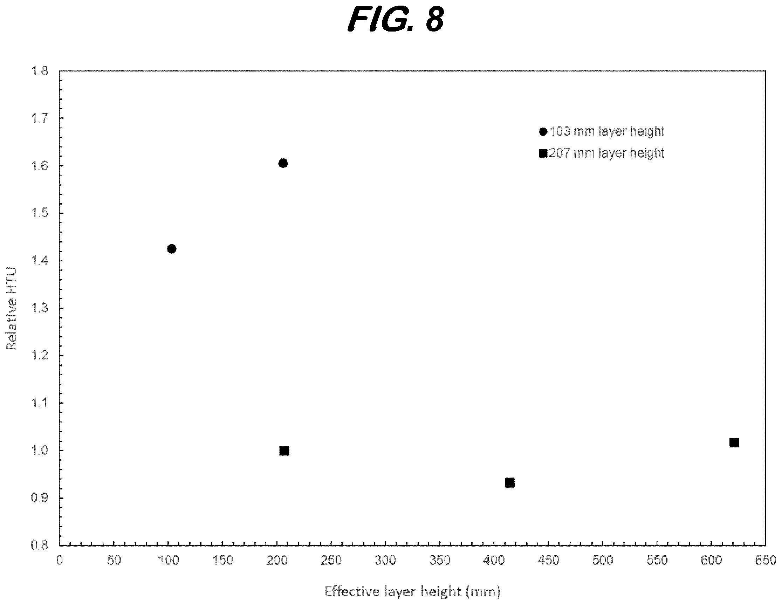

The results are shown in FIG. 8. The results show several trends with some being similar and others being different when compared to those seen in Example 1.

The lowest relative HTU occurs for the effective layer height of about 400 mm. Note that this effective layer height is about 4 times the optimum effective layer height for the smaller column while the diameter is larger by a factor of 4.5. A layer height of 400 mm is much greater than suggested in the prior art literature and is outside the band of 8 to 12 inches taught in the books by Kister, noted earlier.

The relative HTU value for the 103 mm layer height packing is about 1.43. In comparison when the 103 mm layers are rotated in pairs the relative HTU increases to about 1.61. While this trend is similar to what is seen in Example 1 the magnitude of this change is much bigger. The underlying operating mechanisms would be similar except for the added challenge of lateral spreading of liquid and vapor in a bigger 900 mm diameter column in the current example as opposed to a smaller 200 mm diameter column in Example 1.

The relative HTU value for the 207 mm layer height packing at 1.0 is very low compared to the relative HTU value of 1.61 for the 2 X 103 layer height packing. This is very surprising and unlike what was seen in Example 1. The only physical difference between these test conditions is the additional layer transition in the middle of a 206-207 mm layer height. One plausible explanation is that the effect of the disruption to the liquid at this additional layer transition is dominant compared to the vapor phase mass transfer enhancement that also occurs as an entrance effect at this location. The overall effect is different and opposite to that seen in Example 1 and can be explained based on the challenge of lateral spreading of liquid and vapor phases in large diameter columns in comparison to small diameter columns.

When the 207 mm high layers of packing are rotated in pairs resulting in an effective layer height of 414 mm, the relative HTU value decreases to 0.93 compared to the single 207 mm layer height packing HTU value of 1.0. This is the opposite of what happens with the 103 mm layer height packing. This implies that the disruption to the liquid phase at interfaces is less significant as the basic layer height itself increases as this entrance effect on the liquid will occupy a progressively smaller proportion of the overall height.

Based on the above it is expected that if full contiguous packing layers of 414 mm are fabricated, the performance would be similar to what is seen with the aligned pairs of layers (2 x 207 mm) arrangement which shows a relative HTU value of 0.93.

When the 207 mm high layers of packing are rotated in multiples of three resulting in an effective layer height of 621 mm, the relative HTU value increases to 1.02 compared to the single 207 mm layer height packing HTU value of 1.0 and more so compared to the 414 mm effective layer height packing HTU value of 0.93. When the effective layer is 621 mm, there are less effective layers in the bed rotated relative to each other at 90 degrees than when the effective layer heights are 207 and 414 mm. This leads to less lateral spreading of both the vapor and liquid phases resulting in a higher relative HTU, which dominates the benefit from reduced disruption to the liquid phase as the basic layer height increases.

The data and discussions presented in Example 1 and Example 2 and shown in FIG. 7 and FIG. 8 show that the relative HTU is significantly affected by the ratio of effective layer height to the diameter of the exchange column. The results for the 203 mm diameter column are shown in FIG. 7. The results show the relative HTU goes to a minimum when the ratio of effective layer height to the diameter of the exchange column has a value of 0.51. Measurable increases in relative HTU occurred where this ratio is 0.26 and 0.77. The results for the 900 mm diameter column are shown in FIG. 8. The results show the relative HTU goes to a minimum when the ratio of effective layer height to the diameter of the exchange column has a value of 0.46. Measurable increases in relative HTU occurred where this ratio is 0.23 and 0.69. Together, these data indicate that a sweet-spot exists in the ratio of effective layer height to the diameter of the exchange column for obtaining the minimum relative HTU when it is about 0.5. This sweet-spot in this ratio will likely extend to some extent either side of 0.5 without a significant increase in the relative HTU being expected, but could not extend beyond 0.26 - 0.69, which has been demonstrated to show a measurable increase in relative HTU from the minimum measured at about 0.5. It is plausible that such a sweet-spot in this ratio will be bounded as 0.35-0.6 or 0.4 - 0.6.

In large scale industrial columns, which may be defined as having a diameter of at least 900 mm, the optimum layer height would be at least 350 mm or at least 400 mm. As the diameter increases the optimum layer height would continue to increase although not linearly and would also be constrained by other factors. In a given packed section, it is preferable to have at least four layers that are rotated relative to each other in order to facilitate lateral spreading of both the liquid and vapor phases. Thus, in the smallest of industrial columns with a diameter of 900 mm, the bed height would be at least 4 times the minimum layer height of 350 mm or namely at least 1400 mm or at least 1600 mm for a layer height of 400 mm. The optimum value for layer rotations is 20 - 90 degrees with a preferred value of 70 - 90 degrees. The most optimum layer rotation would be at 90 degrees which would facilitate maximum lateral spreading of vapor and liquid.

In a given application the optimum combination of such parameters should be arrived at to maximize the efficiency of the packed column while also minimizing the cost of fabricating the column. The use of larger layer heights than what is known in the prior art will tend to reduce the number of bricks of packing that need to be assembled and installed into a packed column. This will reduce the overall cost although mechanical aid may be necessary when the bricks get too big for manual handling alone.

Lastly, while plausible explanations have been offered for all of the observed data and trends, the current invention is not limited by any of these theorized mechanisms that have been offered. It is possible to offer alternative theorized mechanisms to explain all the observations. The invention is mostly based on the experimental trends observed in the two sets of tests shown in Examples 1 and 2 and anticipated extrapolation to larger diameter columns therefrom.

## Claims

1. An exchange column comprising:

one or more walls (105) defining one or more volumes within the one or more walls (105), at least one volume of the one or more volumes having a longitudinal axis (101) and a cross section normal to the longitudinal axis (101), the cross section having a diameter, $D$, and an area greater than 0.636 m$^2$;
a first layer of structured packing (110) disposed within the at least one volume, the first layer having a height, $h_1$, the first layer of structured packing (110) comprising

(*i-a*) a first set of corrugated plates (111) disposed in vertically parallel relation, each corrugated plate of the first set of corrugated plates (111) having at least one aperture and a plurality of regularly spaced corrugations disposed in crisscrossing relation to the corrugations of an adjacent corrugated plate, the first set of corrugated plates (111) having a vertical height, wherein the height of the first layer (110) is the vertical height of the first set of corrugated plates (111), or
(*i-b*) a first group (210) of two or more sets of corrugated plates (211, 212), the corrugated plates of each set of the two or more sets (211, 212) disposed in vertically parallel relation, each corrugated plate of each set having at least one aperture and a plurality of regularly spaced corrugations disposed in crisscrossing relation to the corrugations of an adjacent corrugated plate, the two or more sets of corrugated plates (211, 212) of the first group (210) positioned vertically relative to one another, wherein the corrugated plates of the two or more sets of corrugated plates (211,212) of the first group (210) are aligned or rotated relative to the corrugated plates of an adjacent set of the two or more sets (211, 212) by less than 5°, wherein the two or more sets of corrugated plates (211,212) of the first group (210) have a combined vertical height, wherein the height of the first layer (110) is the combined vertical height of the two or more sets of corrugated plates (211, 212) of the first group (210); and

a second layer of structured packing (120) disposed within the at least one volume, the second layer having a height, $h_2$, the second layer of structured packing (120) comprising

(*ii-a*) a second set of corrugated plates (121) disposed in vertically parallel relation, each corrugated plate of the second set of corrugated plates (121) having at least one aperture and a plurality of regularly spaced corrugations disposed in crisscrossing relation to the corrugations of an adjacent corrugated plate, the second set of corrugated plates (121) having a vertical height wherein the height of the second layer (120) is the vertical height of the second set of corrugated plates (121), or
(*ii-b*) a second group (220) of two or more sets of corrugated plates (221, 222), the corrugated plates of each set of the two or more sets (221, 222) of the second group (220) disposed in vertically parallel relation, each corrugated plate of each set of the second group (220) having at least one aperture and a plurality of regularly spaced corrugations disposed in crisscrossing relation to the corrugations of an adjacent corrugated plate, the two or more sets of corrugated plates (221, 222) in the second group (220) positioned vertically relative to one another, wherein the corrugated plates of the two or more sets of corrugated plates (221, 222) of the second group (220) are aligned or rotated relative to the corrugated plates of an adjacent set of the two or more sets (221, 222) of the second group (220) by less than 5°, wherein the two or more sets of corrugated plates of the second group have a combined vertical height wherein the height of the second layer is the combined vertical height of the two or more sets of corrugated plates of the second group;

wherein the first layer of structured packing (110) is located above and adjacent the second layer of structured packing (120), wherein the corrugated plates of the first layer (110) adjacent the corrugated plates of the second layer (120) have an orientation that is rotated at an angle relative to the adjacent corrugated plates of the second layer (120), the angle ranging from 20° to 90°;

wherein at least one of the height of the first layer of structured packing (110) and the height of the second layer of structured packing (120) is greater than 350 mm or greater than 400 mm.

2. The exchange column according to claim 1 wherein the height, $h_1$, of the first layer and the diameter, $D$, of the cross section define a first height-to-diameter ratio, $\dfrac{h_1}{D}$, and the height, $h_2$, of the second layer and the diameter, $D$, of the cross section define a second height-to-diameter ratio, $\dfrac{h_2}{D}$, wherein at least one of the first height-to-diameter ratio, $\dfrac{h_1}{D}$, and the second height-to-diameter ratio, $\dfrac{h_2}{D}$, range from 0.35 and 0.6.

3. The exchange column according to claim 1 or claim 2 wherein the angle ranges from 70° to 90°.

4. The exchange column according to any one of claims 1 to 3 wherein the height of the first layer of structured packing (110) and the height of the second layer of structured packing (120) are greater than 350 mm.

5. The exchange column according to any one of claims 1 to 4 further comprising:

a third layer of structured packing (130) disposed within the at least one volume, the third layer of structured packing (130) having a height, the third layer of structured packing (130) comprising

(*iii-a*) a third set of corrugated plates (131) disposed in vertically parallel relation, each corrugated plate of the third set of corrugated plates (131) having at least one aperture and a plurality of regularly spaced corrugations disposed in crisscrossing relation to the corrugations of an adjacent corrugated plate, the third set of corrugated plates (131) having a vertical height wherein the height of the third layer (130) is the vertical height of the third set of corrugated plates (131), or

(*iii-b*) a third group (230) of two or more sets of corrugated plates (231, 232), the corrugated plates of each set of the two or more sets (231, 232) of the third group (230) disposed in vertically parallel relation, each corrugated plate of each set of the third group (230) having at least one aperture and a plurality of regularly spaced corrugations disposed in crisscrossing relation to the corrugations of an adjacent corrugated plate, the two or more sets of corrugated plates (231, 232) in the third group (230) positioned vertically relative to one another, wherein the corrugated plates of the two or more sets of corrugated plates (231, 232) of the third group (230) are aligned or rotated relative to the corrugated plates of an adjacent set of the two or more sets of the third group (230) by less than 5°, wherein the two or more sets of corrugated plates of the third group have a combined vertical height wherein the height of the third layer is the combined vertical height of the two or more sets of corrugated plates of the third group;

wherein the third layer of structured packing (130) is located below and adjacent the second layer of structured packing (120), wherein the corrugated plates of the third layer (130) adjacent the corrugated plates of the second layer (120) have an orientation that is rotated at an angle relative to the adjacent corrugated plates of the second layer (120), the angle ranging from 20° to 90°; and optionally

a fourth layer of structured packing (140) disposed within the at least one volume, the fourth layer of structured packing (140) having a height, the fourth layer of structured packing (140) comprising

(*iv-a*) a fourth set of corrugated plates (141) disposed in vertically parallel relation, each corrugated plate of the fourth set of corrugated plates (141) having at least one aperture and a plurality of regularly spaced corrugations disposed in crisscrossing relation to the corrugations of an adjacent corrugated plate, the fourth set of corrugated plates (141) having a vertical height wherein the height of the fourth layer (140) is the vertical height of the fourth set of corrugated plates (141), or

(*iv-b*) a fourth group (240) of two or more sets of corrugated plates (241, 242), the corrugated plates of each set of the two or more sets (241, 242) of the fourth group (240) disposed in vertically parallel relation, each corrugated plate of each set of the fourth group (240) having at least one aperture and a plurality of regularly spaced corrugations disposed in crisscrossing relation to the corrugations of an adjacent corrugated plate, the two or more sets of corrugated plates (241, 242) in the fourth group (240) positioned vertically relative to one another, wherein the corrugated plates of the two or more sets of corrugated plates (241, 242) of the fourth group (240) are aligned or rotated relative to the corrugated plates of an adjacent set of the two or more sets (241, 242) of the fourth group (240) by less than 5°, wherein the two or more sets of corrugated plates (241, 242) of the fourth group (240) have a combined vertical height wherein the height of the fourth layer (140) is the combined vertical height of the two or more sets of corrugated plates (241, 242) of the fourth group (240);

wherein the fourth layer of structured packing (140), if present, is located below and adjacent the third layer of structured packing (130), wherein the corrugated plates of the fourth layer (140) adjacent the corrugated plates of the third layer (130) have an orientation that is rotated at an angle relative to the adjacent corrugated plates of the third layer (130), the angle ranging from 20° to 90°.

6. The exchange column according to claim 5 wherein the angle of the corrugated plates of the third layer (130) relative to the adjacent corrugated plates of the second layer (120) ranges from 70° to 90°, preferably about 90°, and wherein the angle of the corrugated plates of the fourth layer (140), if present, relative to the adjacent corrugated plates of the third layer (130) ranges from 70° to 90°, preferably about 90°.

7. The exchange column according to claim 5 or claim 6 wherein at least one of the height of the third layer of structured packing (130) and the height of the fourth layer of structured packing (140), if present, is greater than 350 mm.

8. The exchange column according to claim 5 or claim 6 wherein the height of the third layer of structured packing (130) and the height of the fourth layer of structured packing (140), if present, are greater than 350 mm.

9. A method for separating a mixture comprising:

introducing the mixture into the exchange column according to any one of claims 1 to 8; contacting the mixture with the first layer of structured packing (110) and the second layer of structured packing (120); withdrawing a first product from the exchange column; and withdrawing a second product from the exchange column.

10. The method according to claim 9 wherein the mixture comprises oxygen and nitrogen, and wherein the first product is an oxygen-enriched product and the second product is a nitrogen-enriched product.

11. The method according to claim 9 wherein the mixture comprises oxygen and argon, and wherein the first product is an oxygen-enriched product and the second product is an argon-enriched product.

12. The method according to claim 9 wherein the mixture comprises hydrogen and carbon monoxide, and wherein the first product is a hydrogen-enriched product and the second product is a carbon monoxide-enriched product.

13. A method of making an exchange column, the method comprising:

providing one or more walls of the exchange column, the one or more walls (105) defining one or more volumes within the one or more walls (105), at least one volume of the one or more volumes having a longitudinal axis (101) and a cross section normal to the longitudinal axis (101), the cross section having a diameter, $D$, and an area greater than 0.636 m$^2$; providing a first layer of structured packing (110), the first layer of structured packing (110) having a height, $h_1$, the first layer of structured packing (110) comprising

(*i-a*) a first set of corrugated plates (111) disposed in vertically parallel relation, each corrugated plate of the first set of corrugated plates (111) having at least one aperture and a plurality of regularly spaced corrugations disposed in crisscrossing relation to the corrugations of an adjacent corrugated plate, the first set of corrugated plates (111) having a vertical height, wherein the height of the first layer (110) is the vertical height of the first set of corrugated plates (111), or (*i-b*) a first group (210) of two or more sets of corrugated plates (211, 212), the corrugated plates of each set of the two or more sets (211, 212) disposed in vertically parallel relation, each corrugated plate of each set having at least one aperture and a plurality of regularly spaced corrugations disposed in crisscrossing relation to the corrugations of an adjacent corrugated plate, the two or more sets of corrugated plates (211, 212) of the first group (210) positioned vertically relative to one another, wherein the corrugated plates of the two or more sets of corrugated plates (211, 212) of the first group (210) are aligned or rotated relative to the corrugated plates of an adjacent set of the two or more sets (211, 212) by less than 5°, wherein the two or more sets of corrugated plates (211, 212) of the first group (210) have a combined vertical height wherein the height of the first layer is the combined vertical height of the two or more sets of corrugated plates (211, 212) of the first group (210);

providing a second layer of structured packing (120), the second layer of structured packing (120) having a height, $h_2$, the second layer of structured packing comprising

(*ii-a*) a second set of corrugated plates (121) disposed in vertically parallel relation, each corrugated plate of the second set of corrugated plates (121) having at least one aperture and a plurality of regularly spaced corrugations disposed in crisscrossing relation to the corrugations of an adjacent corrugated plate, the second set of corrugated plates having a vertical height wherein the height of the second layer is the vertical height of the second set of corrugated plates (121), or
(*ii-b*) a second group (220) of two or more sets of corrugated plates (221, 222), the corrugated plates of each set of the two or more sets (221, 222) of the second group (220) disposed in vertically parallel relation, each corrugated plate of each set of the second group (220) having at least one aperture and a plurality of regularly spaced corrugations disposed in crisscrossing relation to the corrugations of an adjacent corrugated plate, the two or more sets of corrugated plates (221, 222) in the second group (220) positioned vertically relative to one another, wherein the corrugated plates of the two or more sets of corrugated plates (221, 222) of the second group (220) are aligned or rotated relative to the corrugated plates of an adjacent set of the two or more sets (221, 222) of the second group (220) by less than 5°, wherein the two or more sets of corrugated plates of the second group have a combined vertical height wherein the height of the second layer is the combined vertical height of the two or more sets of corrugated plates (221, 222) of the second group (220); wherein at least one of the height of the first layer of structured packing (110) and the height of the second layer of structured packing (120) is greater than 350 mm or greater than 400 mm;

installing the first and second layers of structured packing (110, 120) within the one or more walls of the exchange column such that the first layer of structured packing (110) is located above and adjacent the second layer of structured packing (120), and such that the corrugated plates of the first layer (110) adjacent the corrugated plates of the second layer (120) have an orientation that is rotated at an angle relative to the adjacent corrugated plates of the second layer (120), the angle ranging from 20° to 90° or ranging from 70° to 90°.

14. The method of making the exchange column according to claim 13 wherein the height, $h_1$, of the first layer and the diameter, $D$, of the exchange column define a first height-to-diameter ratio, $\dfrac{h_1}{D}$, and the height, $h_2$, of the second layer and the diameter, $D$, of the exchange column define a second height-to-diameter ratio, $\dfrac{h_2}{D}$, wherein at least one of the first height-to-diameter ratio, $\dfrac{h_1}{D}$, and the second height-to-diameter ratio, $\dfrac{h_2}{D}$, range from 0.35 and 0.6.

15. The method of making the exchange column according to claim 13 or claim 14 wherein the height of the first layer of structured packing (110) and the height of the second layer of structured packing (120) are greater than 350 mm or greater than 400 mm.

16. The method of making the exchange column according to any one of claims 13 to 15, the method further comprising:

providing a third layer of structured packing (130), the third layer of structured packing (130) comprising

(*iii-a*) a third set of corrugated plates (131) disposed in vertically parallel relation, each corrugated plate of the third set of corrugated plates (131) having at least one aperture and a plurality of regularly spaced corrugations disposed in crisscrossing relation to the corrugations of an adjacent corrugated plate, or

(*iii-b*) a third group (230) of two or more sets of corrugated plates (231, 232), the corrugated plates of each set of the two or more sets (231, 232) of the third group (230) disposed in vertically parallel relation, each corrugated plate of each set of the third group (230) having at least one aperture and a plurality of regularly spaced corrugations disposed in crisscrossing relation to the corrugations of an adjacent corrugated plate, the two or more sets of corrugated plates (231, 232) in the third group (230) positioned vertically relative to one another, wherein the corrugated plates of the two or more sets of corrugated plates (231, 232) of the third group (230) are aligned or rotated relative to the corrugated plates of an adjacent set of the two or more sets of the third group (230) by less than 5°;

wherein the third layer of structured packing (130) is installed within the one or more walls of the exchange column such that the third layer of structured packing (130) is located below and adjacent the second layer of structured packing (120), and such that the corrugated plates of the third layer (130) adjacent the corrugated plates of the second layer (120) have an orientation that is rotated at an angle relative to the adjacent corrugated plates of the second layer (120), the angle ranging from 20° to 90° or ranging from 70° to 90°.

17. The method of making the exchange column according to claim 16, the method further comprising:

providing a fourth layer of structured packing (140), the fourth layer of structured packing (140) comprising

(*iv-a*) a fourth set of corrugated plates (141) disposed in vertically parallel relation, each corrugated plate of the fourth set of corrugated plates (141) having at least one aperture and a plurality of regularly spaced corrugations disposed in crisscrossing relation to the corrugations of an adjacent corrugated plate, or

(*iv-b*) a fourth group (240) of two or more sets of corrugated plates (241, 242), the corrugated plates of each set of the two or more sets (241, 242) of the fourth group (240) disposed in vertically parallel relation, each corrugated plate of each set of the fourth group (240) having at least one aperture and a plurality of regularly spaced corrugations disposed in crisscrossing relation to the corrugations of an adjacent corrugated plate, the two or more sets of corrugated plates (241, 242) in the fourth group (240) positioned vertically relative to one another, wherein the corrugated plates of the two or more sets of corrugated plates (241, 242) of the fourth group (240) are aligned or rotated relative to the corrugated plates of an adjacent set of the two or more sets (241, 242) of the fourth group (240) by less than 5°;

wherein the fourth layer of structured packing (140) is installed within the one or more walls of the exchange column such that the fourth layer of structured packing (140) is located below and adjacent the third layer of structured packing (130), and such that the corrugated plates of the fourth layer (140) adjacent the corrugated plates of the third layer (130) have an orientation that is rotated at an angle relative to the adjacent corrugated plates of the third layer (130), the angle ranging from 20° to 90° or ranging from 70° to 90°.

# FIG. 1
PRIOR ART

# FIG. 1A
PRIOR ART

**FIG. 2**

PRIOR ART

**FIG. 3**

PRIOR ART

# FIG. 4A
### PRIOR ART

24

# FIG. 4B
### PRIOR ART

40

44

4A  4A

48

22

S

48'

46

FIG. 5

FIG. 6

*FIG. 7*

# FIG. 8

EP 3 299 087 A1

Europäisches
Patentamt
European
Patent Office
Office européen
des brevets

# EUROPEAN SEARCH REPORT

Application Number

EP 17 19 2080

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 4 623 454 A (TAUSCHER WILLY [CH] ET AL) 18 November 1986 (1986-11-18) * column 1, lines 4-7, 22-27; figures 2-4 * * column 6, lines 3-12, 21-24 * ----- | 1-17 | INV. B01J19/32 |
| X | DD 154 153 A3 (HOPPE KLAUS; SCHEINMANN WLADIMIR; KULBE ERND; LEBEDJEW JURI; KELLER JU) 3 March 1982 (1982-03-03) * claims; figures 1, 4 * ----- | 1-17 | |
| X | US 4 296 050 A (MEIER WERNER) 20 October 1981 (1981-10-20) * claims 8-10; figures 3, 4 * ----- | 1-17 | |
| A | DE 10 2014 226607 A1 (TECHNISCHE UNIVERSITÄT DRESDEN [DE]; FRAUNHOFER-GESELLSCHAFT ZUR FÖRDE) 23 June 2016 (2016-06-23) * the whole document * ----- | 1-8, 13-17 | |

TECHNICAL FIELDS
SEARCHED    (IPC)

B01J

The present search report has been drawn up for all claims

| Place of search | Date of completion of the search | Examiner |
|---|---|---|
| Munich | 15 January 2018 | Serra, Renato |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 17 19 2080

This annex lists the patent family members relating to the patent documents cited in the above-mentioned European search report.
The members are as contained in the European Patent Office EDP file on
The European Patent Office is in no way liable for these particulars which are merely given for the purpose of information.

15-01-2018

| Patent document cited in search report | | Publication date | Patent family member(s) | | Publication date |
|---|---|---|---|---|---|
| US 4623454 | A | 18-11-1986 | AU | 567648 B2 | 26-11-1987 |
| | | | CA | 1244631 A | 15-11-1988 |
| | | | DE | 3481038 D1 | 22-02-1990 |
| | | | EP | 0151693 A2 | 21-08-1985 |
| | | | JP | H0551340 B2 | 02-08-1993 |
| | | | JP | S60139301 A | 24-07-1985 |
| | | | NO | 845048 A | 17-06-1985 |
| | | | US | 4623454 A | 18-11-1986 |
| DD 154153 | A3 | 03-03-1982 | NONE | | |
| US 4296050 | A | 20-10-1981 | AU | 518076 B2 | 10-09-1981 |
| | | | BR | 7802954 A | 26-12-1978 |
| | | | CA | 1095892 A | 17-02-1981 |
| | | | CH | 617357 A5 | 30-05-1980 |
| | | | DE | 2722424 A1 | 23-11-1978 |
| | | | ES | 243473 U | 16-01-1980 |
| | | | FR | 2390200 A1 | 08-12-1978 |
| | | | GB | 1604361 A | 09-12-1981 |
| | | | IT | 1095901 B | 17-08-1985 |
| | | | JP | S5416761 A | 07-02-1979 |
| | | | MX | 5236 E | 11-05-1983 |
| | | | NL | 7802893 A | 14-11-1978 |
| | | | SE | 417279 B | 09-03-1981 |
| | | | US | 4296050 A | 20-10-1981 |
| DE 102014226607 A1 | | 23-06-2016 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 7357378 B2
- US 6357728 B1
- EP 2822683 B1
- US 4296050 A, Meier
- US 6357728 B
- US 6598861 B
- US 4994098 A
- US 4983194 A
- US 5970743 A

### Non-patent literature cited in the description

- Perry's Chemical Engineers' Handbook
- **HENRY Z. KISTER.** Distillation Design. McGraw-Hill, Inc, 1992
- **HENRY Z. KISTER.** Distillation Operation. Mc-Graw-Hill, Inc, 1990
- Perry's Chemical Engineer's Handbook. 2008
- EQUIPMENT FOR DISTILLATION AND GAS AD-SORPTION: PACKED COLUMNS
- Perry's Chemical Engineer's Handbook